# EUROPEAN PATENT APPLICATION

(11) **EP 4 027 559 A1**
(43) Date of publication of application: **13.07.2022**
(21) Application number: 19947620.1
(22) Date of filing: 30.09.2019
(51) Int. Cl.: H04L 5/00, H04W 72/04

(54) **COMMUNICATION METHOD AND APPARATUS**

(71) Applicant: Huawei Technologies Co., Ltd., Longgang District Shenzhen, Guangdong 518129 (CN)
(72) Inventor: HUANG, Wenwen, Shenzhen, Guangdong 518129 (CN); HUA, Meng, Shenzhen, Guangdong 518129 (CN); TIE, Xiaolei, Shenzhen, Guangdong 518129 (CN); ZHOU, Han, Shenzhen, Guangdong 518129 (CN); ZHANG, Zhanzhan, Shenzhen, Guangdong 518129 (CN)
(74) Representative: Pfenning, Meinig & Partner mbB
(86) International application number: PCT/CN2019/109406
(87) International publication number: WO 2021/062612

(57) **Abstract**

This application relates to the field of communication technologies, and provides a communication method and apparatus, so that signaling overheads can be reduced. The method includes: A network device separately sends configuration parameters of power saving signaling to terminal devices. Then, the network device sends downlink control information carrying the power saving signaling to the terminal device through a physical downlink control channel based on a payload of the DCI and/or a search space set. The configuration parameter of the power saving signaling includes the payload of the DCI and the search space set. The payload of the DCI indicates a quantity of bits of the DCI. The DCI is used to carry the power saving signaling and is transmitted through the physical downlink control channel PDCCH. The search space set is used to determine a monitoring occasion of the PDCCH. In the configuration parameters separately sent to the terminal devices, a configuration parameter of at least one terminal device includes one or more search space sets and a plurality of payloads of DCI. The method is applied to a process of configuring a search space set of a physical downlink control channel.

## Description

### TECHNICAL FIELD

This application relates to the field of communication technologies, and in particular, to a communication method and apparatus.

### BACKGROUND

In a communication system, a terminal device needs to monitor a physical downlink control channel (physical downlink control channel, PDCCH), to determine whether a network device has scheduling information. The network device may configure a discontinuous reception (discontinuous reception, DRX) mechanism for the terminal device, to reduce power consumption of the terminal device. One DRX cycle includes at least time of one DRX-on duration timer (drx-on duration timer) and a possible sleep time period (opportunity for drx). In a time period in which the DRX-on duration timer does not expire, the terminal device needs to monitor the PDCCH to obtain the scheduling information. In the sleep time period, the terminal device does not need to monitor the PDCCH. This reduces power consumption of the terminal device.

To further reduce power consumption of the terminal device, before a time period corresponding to the DRX-on duration timer in one DRX cycle, the network device may send power saving signaling to the terminal device, to indicate whether the terminal device needs to monitor the PDCCH in the time period corresponding to the DRX-on duration timer. If the terminal device needs to monitor the PDCCH in the time period corresponding to the DRX-on duration timer, the terminal device monitors the PDCCH in the time period corresponding to the DRX-on duration timer. If the terminal device does not need to monitor the PDCCH in the time period corresponding to the DRX-on duration timer, the terminal device remains in a sleep state in the time period corresponding to the DRX-on duration timer, to reduce power consumption. However, when the power saving signaling is transmitted through the PDCCH, how to configure a search space set and a payload of downlink control information (downlink control information, DCI) of the PDCCH is not determined.

### SUMMARY

Embodiments of this application provide a communication method and apparatus, so that a search space set and a payload of DCI of a PDCCH can be successfully configured, to reduce signaling overheads.

To achieve the foregoing objective, the following technical solutions are used in embodiments of this application.

According to a first aspect, an embodiment of this application provides a communication method, where the method is applied to a network device or a chip of the network device. The method includes: The network device separately sends configuration parameters of power saving signaling to terminal devices. Then, the network device sends DCI carrying the power saving signaling to the terminal device through a PDCCH based on a payload of the DCI and/or a search space set. The configuration parameter of the power saving signaling includes the payload of the downlink control information DCI and the search space set. The payload of the DCI indicates a quantity of bits of the DCI. The DCI is used to carry the power saving signaling and is transmitted through the physical downlink control channel PDCCH. The search space set is used to determine a monitoring occasion of the PDCCH. In the configuration parameters separately sent to the terminal devices, a configuration parameter of at least one terminal device includes one or more search space sets and a plurality of payloads of DCI.

In this way, the network device can configure different quantities of search space sets for the at least one terminal device, and there may be a plurality of payloads of DCI, so that the search space set and the payload of the DCI of the PDCCH are successfully configured, and configuration of the payload of the DCI is flexible. This helps reduce signaling overheads.

In some possible designs, at least two search space sets in the plurality of search space sets are corresponding to different payloads of DCI, or at least two monitoring occasions in the one or more search space sets are corresponding to different payloads of DCI. In the conventional technology, when power saving signaling is transmitted through a PDCCH, a same payload of DCI is used in different search space sets or on different monitoring occasions through the PDCCH. In comparison, in this embodiment of this application, two or more search space sets can be corresponding to different payloads of DCI, or two or more monitoring occasions can be corresponding to different payloads of DCI, to reduce signaling overheads.

In some possible designs, in the plurality of search space sets, the at least two search space sets include a first search space set and a second search space set. That the network device sends DCI carrying the power saving signaling to the terminal device through a PDCCH based on a search space set includes: The network device sends, in the first search space set, the DCI carrying the power saving signaling to the terminal device through the PDCCH, where a payload of the DCI is a first DCI payload; and sends, in the second search space set, the DCI carrying the power saving signaling to the terminal device through the PDCCH, where a payload of the DCI is a second DCI payload. The first DCI payload and the second DCI payload are different. In this way, the payloads of the DCI corresponding to the two search space sets are different. This helps reduce signaling overheads.

In some possible designs, the terminal devices each are configured with a DRX cycle of a first cycle type, and a part of the terminal devices each are further configured with a DRX cycle of a second cycle type.

That the network device sends, in the first search space set, the DCI carrying the power saving signaling to the terminal device through the PDCCH includes: Before a time period of on duration corresponding to the DRX cycle of the first cycle type, the network device sends the DCI carrying the power saving signaling to the terminal device by using the first search space set through the PDCCH.

That the network device sends, in the second search space set, the DCI carrying the power saving signaling to the terminal device through the PDCCH includes: Before a time period of on duration corresponding to a DRX cycle of a non-first cycle type, the network device sends the DCI carrying the power saving signaling to the terminal device by using the second search space set through the PDCCH.

In this way, the network device sends, in two different search space sets, the DCI carrying the power saving signaling to the terminal device, where the payloads of the DCI are different. This reduces signaling overheads.

In some possible designs, the search space set is related to a cycle type of a DRX cycle, or the search space set is related to a cycle type and a cycle length of a DRX cycle.

In some possible designs, the terminal devices include a first terminal device and a second terminal device. The configuration parameters include a first configuration parameter and a second configuration parameter. The first configuration parameter is used to configure a configuration parameter required by the first terminal device to monitor the power saving signaling, and the second configuration parameter is used to configure a configuration parameter required by the second terminal device to monitor the power saving signaling. The first terminal device is configured with a DRX cycle of the first cycle type, the second terminal device is configured with a DRX cycle of the first cycle type and a DRX cycle of the second cycle type, and a quantity of search space sets in the first configuration parameter is less than a quantity of search space sets in the second configuration parameter.

In some possible designs, the terminal devices include a first terminal device and a second terminal device. The configuration parameters include a first configuration parameter and a second configuration parameter. The first configuration parameter is used to configure a configuration parameter required by the first terminal device to monitor the power saving signaling, and the second configuration parameter is used to configure a configuration parameter required by the second terminal device to monitor the power saving signaling. Cycle types of DRX cycles of the first terminal device and the second terminal device are the same. A cycle length of the DRX cycle of the first terminal device is greater than a cycle length of the DRX cycle of the second terminal device. A quantity of search space sets in the first configuration parameter is less than a quantity of search space sets in the second configuration parameter.

In some possible designs, in the plurality of search space sets, the at least two search space sets include a first search space set and a second search space set. That the network device sends DCI carrying the power saving signaling to the terminal device through a PDCCH based on a payload of the DCI and a search space set includes: The network device sends, in the first search space set, DCI carrying first power saving signaling to the terminal device through the PDCCH, where a payload of the DCI is the first DCI payload. The network device sends, in the second search space set, DCI carrying second power saving signaling to the terminal device through the PDCCH, where a payload of the DCI is the second DCI payload.

Content of the first power saving signaling and content of the second power saving signaling are different. The different power saving signaling includes at least one or more of the following information: wake up indication information, go-to-sleep indication information, a minimum time unit offset value of a physical downlink shared channel PDSCH, a minimum time unit offset value of a physical uplink shared channel PUSCH, a bandwidth part BWP identifier, a maximum quantity of multiple-input multiple-output MIMO layers, and reference signal indication information.

Wake up indication information: The wake up indication information indicates that the terminal device needs to remain in a wake-up state during an active period of a DRX cycle.

Go-to-sleep indication information: The go-to-sleep indication information indicates that the terminal device needs to remain in a sleep state during the active period of the DRX cycle.

Minimum time unit offset value of a PDSCH: The minimum time unit offset value of the PDSCH indicates a minimum offset between the PDCCH and a PDSCH scheduled by the PDCCH in a time unit.

Minimum time unit offset value of a physical uplink shared channel (physical uplink shared channel, PUSCH): The minimum time unit offset value of the PUSCH indicates a minimum offset between a PDCCH and a PUSCH scheduled by the PDCCH in a time unit.

Bandwidth part (bandwidth part, BWP) identifier: The bandwidth part identifier indicates a bandwidth part in an active state during the active period of the DRX cycle.

Maximum quantity of multiple-input multiple-output (multiple-input multiple-output, MIMO) layers: The maximum quantity of multiple-input multiple-output layers indicates maximum quantity of layers of a PDSCH or a PUSCH, which can be scheduled by the PDCCH.

Reference signal indication information: The reference signal indication information is used to trigger the terminal device to receive a channel state information reference signal CSI-RS or send a sounding reference signal SRS.

In this way, the network device can transmit power saving signaling of different content in different search space sets, to reduce signaling overheads.

In some possible designs, in the one or more search space sets, the at least two monitoring occasions include a first monitoring occasion and a second monitoring occasion. The terminal devices each are configured with a DRX cycle of a first cycle type, and a part of the terminal devices each are further configured with a DRX cycle of a second cycle type. The first monitoring occasion is a monitoring occasion before a time period of on duration of the DRX cycle of the first cycle type, and is corresponding to a first DCI payload. The second monitoring occasion is a monitoring occasion before a time period of on duration of a DRX cycle of a non-first cycle type, and is corresponding to a second DCI payload. The first DCI payload and the second DCI payload are different. In this way, the payloads of the DCI corresponding to the two monitoring occasions are different. This further reduces signaling overheads.

In some possible designs, in the one or more search space sets, the at least two monitoring occasions include a first monitoring occasion and a second monitoring occasion. That the network device sends DCI carrying the power saving signaling to the terminal device through a PDCCH based on a payload of the DCI and a search space set includes: The network device sends, on the first monitoring occasion, DCI carrying first power saving signaling to the terminal device through the PDCCH, where a payload of the DCI is the first DCI payload. The network device sends, on the second monitoring occasion, DCI carrying second power saving signaling to the terminal device through the PDCCH, where a payload of the DCI is the second DCI payload. Content of the first power saving signaling and content of the second power saving signaling are different. In some possible designs, the DCI carrying the power saving signaling is group common DCI. The configuration parameter of the power saving signaling further includes position indication information. Position indication information indicates a bit position of the power saving signaling of the terminal device in the group common DCI. The configuration parameter of the at least one terminal device includes a plurality of pieces of position indication information.

In some possible designs, the configuration parameter further includes a radio network temporary identifier RNTI, and the RNTI is used to scramble the DCI carrying the power saving signaling. All RNTIs sent to the terminal device are the same, so that the terminal devices use the same RNTI to descramble the DCI carrying the power saving signaling.

In some possible designs, the configuration parameter is carried in radio resource control RRC signaling.

According to a second aspect, an embodiment of this application provides a communication method, where the method is applied to a terminal device or a chip of the terminal device. The method includes: The terminal device receives a configuration parameter of power saving signaling from a network device. Then, the terminal device receives DCI carrying the power saving signaling from the network device through a PDCCH based on a payload of the DCI and/or a search space set. The configuration parameter of the power saving signaling includes a plurality of payloads of the downlink control information DCI and one or more search space sets. The payload of the DCI indicates a quantity of bits of the DCI. The DCI is used to carry the power saving signaling and is transmitted through the physical downlink control channel PDCCH. The search space set is used to determine a monitoring occasion of the PDCCH.

In this way, the terminal device can be configured with different quantities of search space sets successfully, and there may be a plurality of DCI payloads, so that the payloads of the DCI are flexibly configured. This helps reduce signaling overheads.

In some possible designs, at least two search space sets in the plurality of search space sets are corresponding to different payloads of DCI, or at least two monitoring occasions in the one or more search space sets are corresponding to different payloads of DCI. In the conventional technology, when power saving signaling is transmitted through a PDCCH, a same payload of DCI is used in different search space sets or on different monitoring occasions through the PDCCH. In comparison, in this embodiment of this application, two or more search space sets can be corresponding to different payloads of DCI, or two or more monitoring occasions can be corresponding to different payloads of DCI, to reduce signaling overheads.

In some possible designs, in the plurality of search space sets, the at least two search space sets include a first search space set and a second search space set. That the terminal device receives DCI carrying the power saving signaling from the network device through a PDCCH based on a search space set includes: The terminal device receives, in the first search space set, the DCI carrying the power saving signaling from the network device through the PDCCH, where a payload of the DCI is a first DCI payload. The terminal device receives, in the second search space set, the DCI carrying the power saving signaling from the network device through the PDCCH, where a payload of the DCI is a second DCI payload. The first DCI payload and the second DCI payload are different. In this way, the payloads of the DCI corresponding to the two search space sets are different. This helps reduce signaling overheads.

In some possible designs, the terminal device is configured with a discontinuous reception DRX cycle of a first cycle type and a DRX cycle of a second cycle type.

That the terminal device receives, in the first search space set, the DCI carrying the power saving signaling from the network device through the PDCCH includes: Before a time period of on duration corresponding to the DRX cycle of the first cycle type, the terminal device receives the DCI carrying the power saving signaling from the network device by using the first search space set through the PDCCH.

That the terminal device receives, in the second search space set, the DCI carrying the power saving signaling from the network device through the PDCCH includes: Before a time period of on duration corresponding to a DRX cycle of a non-first cycle type, the terminal device receives the DCI carrying the power saving signaling from the network device by using the second search space set through the PDCCH.

In this way, the terminal device receives, in two different search space sets, the DCI carrying the power saving signaling from the network device, where the payloads of the DCI are different. This reduces signaling overheads.

In some possible designs, in the plurality of search space sets, the at least two search space sets include a first search space set and a second search space set. That the terminal device receives DCI carrying the power saving signaling from the network device through a PDCCH based on a payload of the DCI and a search space set includes: The terminal device receives, in the first search space set, DCI carrying first power saving signaling from the network device through the PDCCH, where a payload of the DCI is the first DCI payload. The terminal device receives, in the second search space set, DCI carrying second power saving signaling from the network device through the PDCCH, where a payload of the DCI is the second DCI payload.

Content of the first power saving signaling and content of the second power saving signaling are different. The different power saving signaling includes at least one or more of the following information: wake up indication information, go-to-sleep indication information, a minimum time unit offset value of a physical downlink shared channel PDSCH, a minimum time unit offset value of a physical uplink shared channel PUSCH, a bandwidth part BWP identifier, a maximum quantity of multiple-input multiple-output MIMO layers, and reference signal indication information.

Wake up indication information: The wake up indication information indicates that the terminal device needs to remain in a wake-up state during an active period of a DRX cycle.

Go-to-sleep indication information: The go-to-sleep indication information indicates that the terminal device needs to remain in a sleep state during the active period of the DRX cycle.

Minimum time unit offset value of a PDSCH: The minimum time unit offset value of the PDSCH indicates a minimum offset between the PDCCH and a PDSCH scheduled by the PDCCH in a time unit.

Minimum time unit offset value of a PUSCH: The minimum time unit offset value of the PUSCH indicates a minimum offset between the PDCCH and a PUSCH scheduled by the PDCCH in a time unit.

BWP identifier: The BWP identifier indicates a bandwidth part in an active state during the active period of the DRX cycle.

Maximum quantity of MIMO layers: The maximum quantity of MIMO layers indicates maximum quantity of layers of a PDSCH or a PUSCH, which can be scheduled by the PDCCH.

Reference signal indication information: The reference signal indication information is used to trigger the terminal device to receive a channel state information reference signal CSI-RS or send a sounding reference signal SRS.

In this way, the terminal device can receive power saving signaling of different content in different search space sets, to reduce signaling overheads.

In some possible designs, in the one or more search space sets, the at least two monitoring occasions include a first monitoring occasion and a second monitoring occasion. The terminal device is configured with a DRX cycle of a first cycle type and a DRX cycle of a second cycle type. The first monitoring occasion is a monitoring occasion before a time period of on duration of the DRX cycle of the first cycle type, and is corresponding to a first DCI payload. The second monitoring occasion is a monitoring occasion before a time period of on duration of a DRX cycle of a non-first cycle type, and is corresponding to a second DCI payload. The first DCI payload and the second DCI payload are different. In this way, the payloads of the DCI corresponding to the two monitoring occasions are different. This further reduces signaling overheads.

In some possible designs, in the one or more search space sets, the at least two monitoring occasions include a first monitoring occasion and a second monitoring occasion. That the terminal device receives DCI carrying the power saving signaling from the network device through a PDCCH based on a payload of the DCI and a search space set includes: The terminal device receives, on the first monitoring occasion, DCI carrying first power saving signaling from the network device through the PDCCH, where a payload of the DCI is the first DCI payload. The terminal device receives, on the second monitoring occasion, DCI carrying second power saving signaling from the network device through the PDCCH, where a payload of the DCI is the second DCI payload. Content of the first power saving signaling and content of the second power saving signaling are different.

In some possible designs, the DCI carrying the power saving signaling is group common DCI. The configuration parameter further includes position indication information. The position indication information indicates a bit position of the power saving signaling of the terminal device in the group common DCI. The configuration parameter includes a plurality of pieces of position indication information.

In some possible designs, the configuration parameter further includes a radio network temporary identifier RNTI, and the RNTI is used to descramble the DCI carrying the power saving signaling.

In some possible designs, the configuration parameter is carried in radio resource control RRC signaling.

According to a third aspect, an embodiment of this application provides a communication apparatus. The apparatus may be the network device in the first aspect. The apparatus includes a transceiver and a processor. The transceiver is configured to separately send configuration parameters of power saving signaling to terminal devices. The transceiver is further configured to send DCI carrying the power saving signaling to the terminal device through a PDCCH. The processor is configured to enable, based on a payload of the DCI and/or a search space set, the transceiver to send the DCI carrying the power saving signaling to the terminal device through the PDCCH. The configuration parameter of the power saving signaling includes the payload of the downlink control information DCI and the search space set. The payload of the DCI indicates a quantity of bits of the DCI. The DCI is used to carry the power saving signaling and is transmitted through the physical downlink control channel PDCCH. The search space set is used to determine a monitoring occasion of the PDCCH. In the configuration parameters separately sent to the terminal devices, a configuration parameter of at least one terminal device includes one or more search space sets and a plurality of payloads of DCI.

In some possible designs, at least two search space sets in the plurality of search space sets are corresponding to different payloads of DCI, or at least two monitoring occasions in the one or more search space sets are corresponding to different payloads of DCI.

In some possible designs, in the plurality of search space sets, the at least two search space sets include a first search space set and a second search space set. That the processor is configured to enable, based on a search space set, the transceiver to send the DCI carrying the power saving signaling to the terminal device through the PDCCH includes: The processor is configured to determine the first search space set and the second search space set. The transceiver is configured to send, in the first search space set, the DCI carrying the power saving signaling to the terminal device through the PDCCH, where a payload of the DCI is a first DCI payload. The transceiver is further configured to send, in the second search space set, the DCI carrying the power saving signaling to the terminal device through the PDCCH, where a payload of the DCI is a second DCI payload. The first DCI payload and the second DCI payload are different.

In some possible designs, the terminal devices each are configured with a DRX cycle of a first cycle type, and a part of the terminal devices each are further configured with a DRX cycle of a second cycle type.

That the transceiver is configured to send, in the first search space set, the DCI carrying the power saving signaling to the terminal device through the PDCCH includes: The transceiver is configured to: before a time period of on duration corresponding to the DRX cycle of the first cycle type, send the DCI carrying the power saving signaling to the terminal device by using the first search space set through the PDCCH.

That the transceiver is further configured to send, in the second search space set, the DCI carrying the power saving signaling to the terminal device through the PDCCH includes: The transceiver is further configured to: before a time period of on duration corresponding to a DRX cycle of a non-first cycle type, send the DCI carrying the power saving signaling to the terminal device by using the second search space set through the PDCCH.

In some possible designs, the search space set is related to a cycle type of a DRX cycle, or the search space set is related to a cycle type and a cycle length of a DRX cycle.

In some possible designs, the terminal devices include a first terminal device and a second terminal device. The configuration parameters include a first configuration parameter and a second configuration parameter. The first configuration parameter is used to configure a configuration parameter required by the first terminal device to monitor the power saving signaling, and the second configuration parameter is used to configure a configuration parameter required by the second terminal device to monitor the power saving signaling. The first terminal device is configured with a DRX cycle of the first cycle type, the second terminal device is configured with a DRX cycle of the first cycle type and a DRX cycle of the second cycle type, and a quantity of search space sets in the first configuration parameter is less than a quantity of search space sets in the second configuration parameter.

In some possible designs, the terminal devices include a first terminal device and a second terminal device. The configuration parameters include a first configuration parameter and a second configuration parameter. The first configuration parameter is used to configure a configuration parameter required by the first terminal device to monitor the power saving signaling, and the second configuration parameter is used to configure a configuration parameter required by the second terminal device to monitor the power saving signaling. Cycle types of DRX cycles of the first terminal device and the second terminal device are the same. A cycle length of the DRX cycle of the first terminal device is greater than a cycle length of the DRX cycle of the second terminal device. A quantity of search space sets in the first configuration parameter is less than a quantity of search space sets in the second configuration parameter.

In some possible designs, in the plurality of search space sets, the at least two search space sets include a first search space set and a second search space set.

That the processor is configured to enable, based on a payload of the DCI and a search space set, the transceiver to send the DCI carrying the power saving signaling to the terminal device through the PDCCH includes: The processor is configured to determine the first search space set, and determine a payload of DCI carrying first power saving signaling as the first DCI payload. The transceiver is configured to send, in the first search space set, the DCI carrying the first power saving signaling to the terminal device through the PDCCH.

The processor is configured to determine the second search space set, and determine a payload of DCI carrying second power saving signaling as the second DCI payload. The transceiver is configured to send, in the second search space set, the DCI carrying the second power saving signaling to the terminal device through the PDCCH. Content of the first power saving signaling and content of the second power saving signaling are different.

In some possible designs, in the one or more search space sets, the at least two monitoring occasions include a first monitoring occasion and a second monitoring occasion. The terminal devices each are configured with a DRX cycle of a first cycle type, and a part of the terminal devices each are further configured with a DRX cycle of a second cycle type. The first monitoring occasion is a monitoring occasion before a time period of on duration of the DRX cycle of the first cycle type, and is corresponding to a first DCI payload. The second monitoring occasion is a monitoring occasion before a time period of on duration of a DRX cycle of a non-first cycle type, and is corresponding to a second DCI payload. The first DCI payload and the second DCI payload are different.

In some possible designs, in the one or more search space sets, the at least two monitoring occasions include a first monitoring occasion and a second monitoring occasion.

That the processor is configured to enable, based on a payload of the DCI and a search space set, the transceiver to send the DCI carrying the power saving signaling to the terminal device through the PDCCH includes: The processor is configured to determine the first monitoring occasion, and determine a payload of DCI carrying first power saving signaling as the first DCI payload. The transceiver is configured to send, on the first monitoring occasion, the DCI carrying the first power saving signaling to the terminal device through the PDCCH.

The processor is configured to determine the second monitoring occasion, and determine a payload of DCI carrying second power saving signaling as the second DCI payload. The transceiver is configured to send, on the second monitoring occasion, the DCI carrying the second power saving signaling to the terminal device through the PDCCH. Content of the first power saving signaling and content of the second power saving signaling are different.

In some possible designs, the DCI carrying the power saving signaling is group common DCI. The configuration parameter of the power saving signaling further includes position indication information. Position indication information indicates a bit position of the power saving signaling of the terminal device in the group common DCI. The configuration parameter of the at least one terminal device includes a plurality of pieces of position indication information.

According to a fourth aspect, an embodiment of this application provides a communication apparatus. The apparatus may be the terminal device in the second aspect. The apparatus includes a transceiver and a processor. The transceiver is configured to receive a configuration parameter of power saving signaling from a network device. The transceiver is further configured to receive DCI carrying the power saving signaling from the network device through a PDCCH. The controller is configured to enable, based on a payload of the DCI and/or a search space set, the transceiver to receive the DCI carrying the power saving signaling from the network device through the PDCCH. The configuration parameter of the power saving signaling includes a plurality of payloads of the downlink control information DCI and one or more search space sets. The payload of the DCI indicates a quantity of bits of the DCI. The DCI is used to carry the power saving signaling and is transmitted through the physical downlink control channel PDCCH. The search space set is used to determine a monitoring occasion of the PDCCH.

In some possible designs, at least two search space sets in the plurality of search space sets are corresponding to different payloads of DCI, or at least two monitoring occasions in the one or more search space sets are corresponding to different payloads of DCI.

In some possible designs, in the plurality of search space sets, the at least two search space sets include a first search space set and a second search space set. That the processor is configured to enable, based on a search space set, the transceiver to receive the DCI carrying the power saving signaling from the network device through the PDCCH includes: The processor is configured to determine the first search space set and the second search space set. The transceiver is configured to receive, in the first search space set, the DCI carrying the power saving signaling from the network device through the PDCCH, where a payload of the DCI is a first DCI payload. The transceiver is further configured to receive, in the second search space set, the DCI carrying the power saving signaling from the network device through the PDCCH, where a payload of the DCI is a second DCI payload. The first DCI payload and the second DCI payload are different.

In some possible designs, the communication apparatus is configured with a discontinuous reception DRX cycle of a first cycle type and a DRX cycle of a second cycle type.

That the transceiver is configured to receive, in the first search space set, the DCI carrying the power saving signaling from the network device through the PDCCH includes: The transceiver is configured to: before a time period of on duration corresponding to the DRX cycle of the first cycle type, receive the DCI carrying the power saving signaling from the network device by using the first search space set through the PDCCH.

That the transceiver is further configured to receive, in the second search space set, the DCI carrying the power saving signaling from the network device through the PDCCH includes: The transceiver is further configured to: before a time period of on duration corresponding to a DRX cycle of a non-first cycle type, receive the DCI carrying the power saving signaling from the network device by using the second search space set through the PDCCH.

In some possible designs, in the plurality of search space sets, the at least two search space sets include a first search space set and a second search space set.

That the processor is configured to enable, based on a payload of the DCI and a search space set, the transceiver to receive the DCI carrying the power saving signaling from the network device through the PDCCH includes:

The processor is configured to determine the first search space set, and determine a payload of DCI carrying first power saving signaling as the first DCI payload. The transceiver is configured to receive, in the first search space set, the DCI carrying the first power saving signaling from the network device through the PDCCH.

The processor is configured to determine the second search space set, and determine a payload of DCI carrying second power saving signaling as the second DCI payload. The transceiver is configured to receive, in the second search space set, the DCI carrying the second power saving signaling from the network device through the PDCCH. Content of the first power saving signaling and content of the second power saving signaling are different.

In some possible designs, in the one or more search space sets, the at least two monitoring occasions include a first monitoring occasion and a second monitoring occasion. The communication apparatus is configured with a DRX cycle of a first cycle type and a DRX cycle of a second cycle type. The first monitoring occasion is a monitoring occasion before a time period of on duration of the DRX cycle of the first cycle type, and is corresponding to a first DCI payload. The second monitoring occasion is a monitoring occasion before a time period of on duration of a DRX cycle of a non-first cycle type, and is corresponding to a second DCI payload. The first DCI payload and the second DCI payload are different.

In some possible designs, in the one or more search space sets, the at least two monitoring occasions include a first monitoring occasion and a second monitoring occasion.

That the processor is configured to enable, based on a payload of the DCI and a search space set, the transceiver to receive the DCI carrying the power saving signaling from the network device through the PDCCH includes:
The processor is configured to determine the first monitoring occasion, and determine a payload of DCI carrying first power saving signaling as the first DCI payload. The transceiver is configured to receive, on the first monitoring occasion, the DCI carrying the first power saving signaling from the network device through the PDCCH.

The processor is configured to determine the second monitoring occasion, and determine a payload of DCI carrying second power saving signaling as the second DCI payload. The transceiver is configured to receive, on the second monitoring occasion, the DCI carrying the second power saving signaling from the network device through the PDCCH. Content of the first power saving signaling and content of the second power saving signaling are different.

In some possible designs, the DCI carrying the power saving signaling is group common DCI. The configuration parameter further includes position indication information, the position indication information indicates a bit position of the power saving signaling of the communication apparatus in the group common DCI, and the configuration parameter includes a plurality of pieces of position indication information.

According to a fifth aspect, an embodiment of this application provides a communication apparatus, configured to implement a function of the network device in the first aspect, or configured to implement a function of the terminal device in the second aspect.

According to a sixth aspect, an embodiment of this application provides a communication apparatus. The communication apparatus has a function of implementing the communication method according to any one of the foregoing aspects. The function may be implemented by hardware, or may be implemented by hardware executing corresponding software. The hardware or the software includes one or more modules corresponding to the function.

According to a seventh aspect, an embodiment of this application provides a communication apparatus, including a processor and a memory. The memory is configured to store computer-executable instructions. When the communication apparatus runs, the processor executes the computer-executable instructions stored in the memory, so that the communication apparatus performs the communication method according to any one of the foregoing aspects.

According to an eighth aspect, an embodiment of this application provides a communication apparatus, including a processor. The processor is configured to: couple to a memory, and after reading instructions in the memory, perform the communication method according to any one of the foregoing aspects based on the instructions.

According to a ninth aspect, an embodiment of this application provides a computer-readable storage medium. The computer-readable storage medium stores instructions. When the instructions are run on a computer, the computer is enabled to perform the communication method according to any one of the foregoing aspects.

According to a tenth aspect, an embodiment of this application provides a computer program product including instructions. When the computer program product runs on a computer, the computer is enabled to perform the communication method according to any one of the foregoing aspects.

According to an eleventh aspect, an embodiment of this application provides a circuit system. The circuit system includes a processing circuit, and the processing circuit is configured to perform the communication method according to any one of the foregoing aspects.

According to a twelfth aspect, an embodiment of this application provides a chip, including a processor. The processor is coupled to a memory. The memory stores program instructions. When the program instructions stored in the memory are executed by the processor, the communication method according to any one of the foregoing aspects is implemented.

According to a thirteenth aspect, an embodiment of this application provides a communication system, where the communication system includes the terminal device in any one of the foregoing aspects and the network device in any one of the foregoing aspects.

For technical effects brought by any design manner in the second aspect to the thirteenth aspect, refer to technical effects brought by different design manners in the first aspect. Details are not described herein again.

### BRIEF DESCRIPTION OF DRAWINGS

FIG. 1a is a schematic diagram of a discontinuous reception cycle according to a related technology;
FIG. 1b is a schematic diagram of another discontinuous reception cycle according to a related technology;
FIG. 2 is a schematic diagram of an architecture of a communication system according to an embodiment of this application;
FIG. 3 is a schematic flowchart of a communication method according to an embodiment of this application;
FIG. 4 is a schematic diagram of a configuration of a discontinuous reception cycle according to an embodiment of this application;
FIG. 5 is a schematic diagram of another configuration of a discontinuous reception cycle according to an embodiment of this application;
FIG. 6 is a schematic diagram of still another configuration of a discontinuous reception cycle according to an embodiment of this application;
FIG. 7 is a schematic diagram of a relationship between a search space set and a monitoring occasion according to an embodiment of this application;
FIG. 8 is a schematic diagram of a format of downlink control information according to an embodiment of this application;
FIG. 9 is a schematic diagram of yet another configuration of a discontinuous reception cycle according to an embodiment of this application;
FIG. 10 is a schematic flowchart of another communication method according to an embodiment of this application;
FIG. 11 is a schematic flowchart of still another communication method according to an embodiment of this application;
FIG. 12 is a schematic diagram of still yet another configuration of a discontinuous reception cycle according to an embodiment of this application;
FIG. 13 is a schematic diagram of a structure of a communication apparatus according to an embodiment of this application; and
FIG. 14 is a schematic diagram of a structure of a communication apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but are not used to describe a particular order of the objects. In addition, the terms "include", "have", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device. It should be noted that in embodiments of this application, a word such as "example" or "for example" is used to represent an example, an example illustration, or description. Any embodiment or design scheme described as an "example" or with "for example" in embodiments of this application should not be explained as being more preferred or having more advantages than another embodiment or design scheme. Specifically, use of the word such as "example" or "for example" is intended to present a related concept in a specific manner.

To make embodiments of this application clearer, some terms and processing procedures in embodiments of this application are first briefly described.

Bandwidth part (bandwidth part, BWP): The bandwidth part is a part of frequency domain resources on carrier bandwidth configured by a network device for a terminal device. The terminal device may support one or more carriers, and one or more BWPs are configured on one carrier. In other words, the network device may configure one or more BWPs on each carrier for the terminal device. When a plurality of BWPs are configured, the BWPs may overlap or may not overlap. On a downlink, the terminal device may be configured with one or more downlink BWPs, and the network device may switch an active downlink BWP by using UE-specific DCI. The terminal device does not receive a physical downlink shared channel (physical downlink shared channel, PDSCH) or a physical downlink control channel (physical downlink control channel, PDCCH) on an inactive downlink BWP except the active downlink BWP. On an uplink, the terminal device may also be configured with one or more uplink BWPs, and the network device may switch an active uplink BWP by using UE-specific DCI. The terminal device does not send a physical uplink shared channel (physical uplink shared channel, PUSCH) or a physical uplink control channel (physical uplink control channel, PUCCH) on an inactive uplink BWP except the active uplink BWP.

Search space set (search space set): The search space set is used to determine a monitoring occasion for monitoring a PDCCH by a terminal device. A network device may configure a search space set of the physical downlink control channel (physical downlink control channel, PDCCH) for the terminal device. The terminal device blindly detects the PDCCH on each monitoring occasion based on the configured search space set. A configuration of each search space set may include the following information: a search space set index (used to distinguish different search space sets), a control resource set (control resource set, CORESET) index associated with the search space set, a PDCCH monitoring cycle and a slot offset within the PDCCH monitoring cycle, a PDCCH monitoring pattern (pattern) within a slot (which indicates a start symbol of a CORESET in one slot), on duration of the search space set (which indicates a quantity of consecutive slots that exist when the search space set is present), a PDCCH aggregation level (aggregation level, AL), a quantity of PDCCH candidates (PDCCH candidates) at each aggregation level, a search space set type indicator (for example, indicating whether the search space set is a common search space set (common search space set, CSS) or a UE-specific search space set (user-specific search space set, USS)), and a format (format) of downlink control information (downlink control information, DCI) of the common search space set or the UE-specific search space set. The terminal device determines a monitoring occasion (monitoring occasion) of the PDCCH based on the PDCCH monitoring cycle, the slot offset within the PDCCH monitoring cycle, and the PDCCH monitoring pattern within the slot that are configured in the search space set. The network device may configure one or more search space sets for the terminal device, to monitor the PDCCH. For one downlink bandwidth part (bandwidth part, BWP) of one serving cell, the network device (for example, a base station) may configure a maximum of 10 search space sets for the terminal device by using radio resource control (radio resource control, RRC) signaling. The PDCCH monitoring cycle in the search space set may be set to a specific value ranging from 1 slot to 2560 slots.

Common search space set and UE-specific search space set: The common search space set is mainly used to broadcast common information or send control information corresponding to a group common message. A type of the search space set in RRC signaling is set to "common (common)", namely, the common search space set. There may be a plurality of types (types) of common search space sets, for example, a type 0 PDCCH common search space set, a type 0A PDCCH common search space set, a type 1 PDCCH common search space set, a type 2 PDCCH common search space set, and a type 3 PDCCH common search space set. Generally, the common search space set is configured for all terminal devices or a group of terminal devices in a cell. The UE-specific search space set is mainly used to send control information corresponding to terminal device-specific data. A type of the search space set in the RRC signaling is set to "UE-specific (UE-specific)". The common search space set and the UE-specific search space set may overlap.

Control resource set: The control resource set indicates a time-frequency resource set, used to carry a PDCCH. The terminal device performs PDCCH detection in a corresponding control resource set. In frequency domain, one control resource set includes several resource blocks (resource blocks, RBs), and a frequency domain size and a frequency domain position are configured by using a higher layer parameter. In time domain, a time domain length of one control resource set may be one, two, or three time domain symbols, and is also configured by using a higher layer parameter. The network device may configure one or more CORESETs for the terminal device, and the terminal device monitors the PDCCH in a CORESET associated with a search space set.

The network device configures the CORESET and the search space set by using radio resource control (radio resource control, RRC) signaling, so that the terminal device blindly detects the PDCCH. A function of the PDCCH is to carry scheduling information of data. The terminal device needs to determine a monitoring occasion of the PDCCH based on the CORESET and the search space set, and then blindly detect the PDCCH to obtain the scheduling information. If the PDCCH has the scheduling information, the terminal device receives data through a PDSCH or sends data through a PUSCH based on the scheduling information. However, in many cases, the network device does not necessarily have the scheduling information to send to the terminal device, and the terminal device needs to blindly detect the PDCCH periodically. This wastes power of the terminal device.

To reduce power consumption of the terminal device, the network device may configure a discontinuous reception (discontinuous reception, DRX) mechanism for the terminal device. The DRX mechanism may be classified into two types: idle (idle) mode DRX and connected mode discontinuous reception (connected mode discontinuous reception, C-DRX). The two implementation mechanisms are different. In the idle mode DRX, the terminal device mainly monitors paging of the network device. The terminal device monitors one paging occasion (paging occasion) in one DRX cycle (DRX cycle).

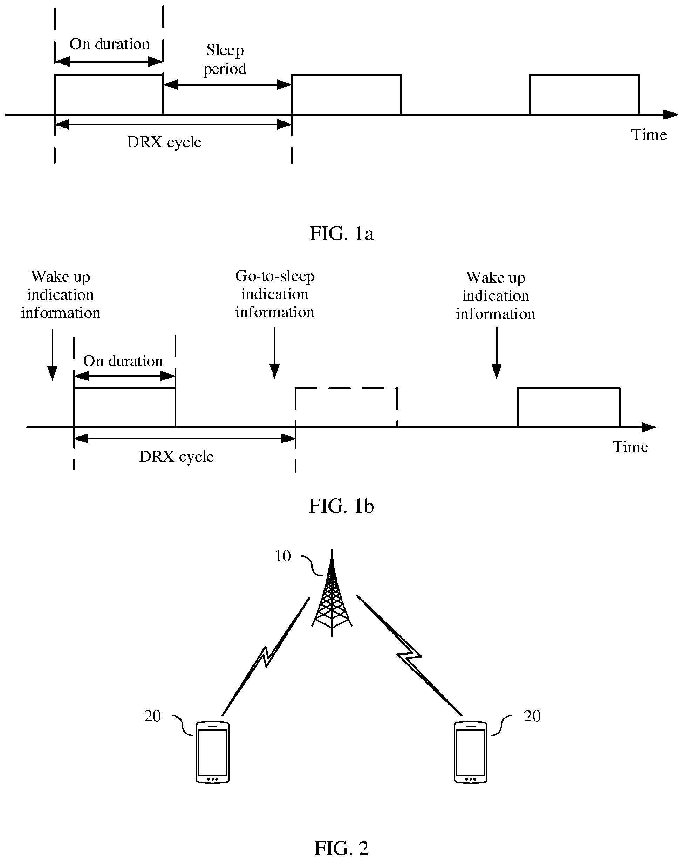

In the connected mode discontinuous reception mechanism, refer to FIG. 1a. The terminal device may periodically enter a sleep state, and does not need to monitor a PDCCH. One DRX cycle includes time of at least one DRX-on duration timer (drx-on duration timer) and a possible sleep time period (opportunity for drx). The time of the DRX-on duration timer is also referred to as "on duration (on duration)", and the possible sleep time period is also referred to as a "sleep period", which refers to non-active time (non-active time) in the DRX cycle. The network device configures a DRX parameter for the terminal device by using the RRC signaling, for example, a DRX cycle (DRX cycle), and a parameter of a timer such as a DRX-on duration timer (drx-on duration timer), a DRX-inactivity timer (drx-inactivity timer), a DRX-hybrid automatic repeat request round trip timer (drx-hybrid auto repeat request round trip timer, drx-HARQ-RTT-Timer), or a DRX-retransmission timer (drx-retransmission timer). The terminal device needs to monitor a PDCCH when each of the DRX-on duration timer, the DRX-inactivity timer, a downlink (downlink, DL) DRX-retransmission timer, and an uplink (uplink, UL) DRX-retransmission timer is started. These time periods are also collectively referred to as active time (active time). In the non-active time, the terminal device may enter the sleep state and does not need to monitor the PDCCH, to reduce power consumption.

DRX-on duration timer: The DRX-on duration timer indicates duration for continuously monitoring the PDCCH by the terminal device at the beginning of the DRX cycle.

DRX-inactivity timer: When detecting that the PDCCH is used to schedule initially transmitted uplink or downlink data, the terminal device starts (or restarts) the timer and keeps monitoring the PDCCH for the duration.

DRX-hybrid automatic repeat request round trip timer: The DRX-hybrid automatic repeat request round trip timer includes an uplink DRX-HARQ RTT timer and a downlink DRX-HARQ RTT timer. The downlink DRX-HARQ RTT timer indicates minimum duration that exists before the terminal device expects to receive a downlink retransmission assignment (assignment). The uplink DRX-HARQ RTT timer indicates minimum duration that exists before the terminal device expects to receive a grant for uplink retransmission.

DRX-retransmission timer (drx-retransmission timer): The DRX-retransmission timer includes the UL DRX-retransmission timer and the DL DRX-retransmission timer. The DL DRX-retransmission timer is used to specify maximum duration until the terminal device expects to obtain downlink retransmission. The UL DRX-retransmission timer is used to specify maximum duration until the terminal device expects to obtain a grant for uplink retransmission.

Downlink transmission is used as an example. A general process of DRX is as follows: After one DRX cycle is started, in a time period of on duration (on duration), the terminal device starts to continuously monitor a PDCCH. If a PDCCH is detected in the time period of the on duration, and the PDCCH is used to schedule newly transmitted data (that is, the PDCCH is used to transmit scheduling information for initial transmission), the terminal device receives the data based on the received scheduling information, and starts the DRX-inactivity timer. Each time the terminal device detects scheduling information for initial transmission, the DRX-inactivity timer is started (or restarted) once. The terminal device continuously monitors the PDCCH in a timing period of the DRX-inactivity timer until the DRX-inactivity timer expires. The terminal device enters a sleep state, and does not need to monitor the PDCCH. If no PDCCH is detected in the time period of the on duration, the terminal device directly enters a sleep state after the time period of the on duration ends, as shown in FIG. 1a. The terminal device periodically needs to monitor a PDCCH in a time period of each on duration. In FIG. 1a, a solid-line square indicates a time period of the on duration.

Configurations of parameters of the foregoing timers are all semi-persistent. That is, even if the network device does not send scheduling information to the terminal device, the terminal device still needs to enable a receiver in the time period of the on duration, to monitor the PDCCH.

To further reduce power consumption of the terminal device, power saving signaling (power saving signal) is introduced on a basis of the DRX mechanism. To be specific, before a time period of DRX on duration, the network device sends the power saving signaling to the terminal device, to indicate the terminal device whether to detect a PDCCH in the time period of the on duration. For example, if the terminal device receives wake up (wake up) indication information of the power saving signaling, the terminal device starts the DRX-on duration timer, and needs to monitor the PDCCH in the time period of the on duration. If the terminal device receives go-to-sleep (go-to-sleep) indication information of the power saving signaling, the terminal device does not start the DRX-on duration timer, and does not need to monitor the PDCCH in the time period of the on duration. Alternatively, if the terminal device detects the power saving signaling, the terminal device starts the DRX-on duration timer, and needs to monitor the PDCCH in the time period of the on duration. If the terminal device detects no power saving signaling, the terminal device does not start the DRX-on duration timer, and does not need to monitor the PDCCH in the time period of the on duration, as shown in FIG. 1b. In FIG. 1b, a time period of on duration shown by a solid line indicates that the terminal device needs to monitor the PDCCH in the time period of on duration, and a time period of on duration shown by a dashed line indicates that the terminal device does not need to monitor the PDCCH in the time period of on duration. In addition, the power saving signaling may further indicate the terminal device to start the DRX-on duration timer, but the PDCCH does not need to be monitored in the time period of the on duration. In this case, the terminal device may send or receive a reference signal in the time period of the on duration, and perform measurement based on the reference signal.

The terminal device monitors the power saving signaling before the time period of the on duration, and an offset between a symbol position at which the power saving signaling is located and a start symbol position of the on duration may be greater than or equal to zero. For different terminal devices, offsets between symbol positions at which the power saving signaling is located and start symbol positions of the on duration may be the same, or may be different. A value of the offset between the symbol position at which the power saving signaling is located and the start symbol position of the on duration may be determined by using configuration information in a search space set, or may be determined by directly configuring an offset between a monitoring occasion of the PDCCH and the start symbol of the on duration. Alternatively, an offset between a slot position at which the power saving signaling is located and a start slot position of the on duration may be greater than or equal to zero. For different terminal devices, offsets between slot positions at which the power saving signaling is located and start slot positions of the on duration may be the same, or may be different. A value of the offset between the slot position at which the power saving signaling is located and a slot position of the on duration may be determined by using configuration information in a search space set, or may be determined by directly configuring an offset between a monitoring occasion of the PDCCH and the slot position of the on duration.

In addition to the wake up indication information or the go-to-sleep indication information, the power saving signaling may further include at least one or more of the following information:
Minimum time unit offset value: The minimum time unit offset value includes a minimum time unit offset value of a PDSCH and/or a minimum time unit offset value of a PUSCH. The minimum time unit offset value of the PDSCH indicates a minimum offset between the PDCCH and a PDSCH scheduled by the PDCCH in a time unit. During actual scheduling, a time unit offset value between the PDCCH and the scheduled PDSCH is greater than or equal to the minimum time unit offset value. The minimum time unit offset value of the PUSCH indicates a minimum offset between the PDCCH and a PUSCH scheduled by the PDCCH in a time unit. During actual scheduling, a time unit offset value between the PDCCH and the scheduled PUSCH is greater than or equal to the minimum time unit offset value. A unit of the time unit may be any one of the following units: a radio frame, a subframe, a slot, a mini-slot, an orthogonal frequency division multiplexing (orthogonal frequency division multiplexing, OFDM) symbol, a microsecond, and a millisecond.

For example, the slot is used as the unit of the time unit. A minimum time unit offset value of the PDSCH is recorded as minimum K0, where minimum K0 refers to a minimum slot offset value between the PDCCH and the PDSCH scheduled by the PDCCH. During actual scheduling, a time unit offset value of the PDSCH is recorded as K0. If K0=0, it indicates that the PDCCH and the PDSCH scheduled by the PDCCH may be in a same slot. If K0>0, it indicates that the PDCCH and the PDSCH scheduled by the PDCCH are not in a same slot.

A minimum time unit offset value of the PUSCH is recorded as minimum K2, where minimum K2 refers to a minimum slot offset value between the PDCCH and the PUSCH scheduled by the PDCCH. During actual scheduling, a time unit offset value of the PUSCH is recorded as K2. If K2=0, it indicates that the PDCCH and the PUSCH scheduled by the PDCCH may be in a same slot. If K2>0, it indicates that the PDCCH and the PUSCH scheduled by the PDCCH are not in a same slot. Minimum K0 is greater than 0 or minimum K2 is greater than 0, so that power consumption of the terminal device can be reduced.

Bandwidth part (bandwidth part, BWP) identifier: The bandwidth part identifier indicates a bandwidth part in an active state in the time period of the on duration of the DRX cycle. A smaller bandwidth of an active BWP can reduce more power consumption of the terminal device.

Maximum quantity of multiple-input multiple-output (multiple-input multiple-output, MIMO) layers: The maximum quantity of multiple-input multiple-output layers indicates a maximum quantity of layers of a PDSCH or a PUSCH in the time period of the on duration of the DRX cycle, which can be scheduled by the PDCCH. The terminal device may enable or disable a specific quantity of antennas based on the maximum quantity of layers, to reduce power consumption of the terminal device. A larger quantity of antennas enabled by the terminal device causes greater power consumption of the terminal device.

Reference signal indication information: The reference signal indication information is used to trigger the terminal device to receive a channel state indicator reference signal (channel state indicator reference signal, CSI-RS) or send a sounding reference signal (sounding reference signal, SRS).

The PDCCH may transmit UE-specific downlink control information (downlink control information, DCI) or group common (group common) DCI. In this embodiment of this application, when the power saving signaling is transmitted through the PDCCH by using the group common DCI, the network device transmits the group common DCI to a group of terminal devices on a common search space set through the PDCCH. Correspondingly, each terminal device in the group receives the group common DCI from the network device, determines a monitoring occasion of the PDCCH based on the common search space set in the group common DCI, and monitors the PDCCH carrying the power saving signaling on the monitoring occasion of the PDCCH. The network device further needs to configure a payload size (payload size) of the group common DCI for the terminal device. Therefore, when the power saving signaling is transmitted through the PDCCH, how to configure the search space set and the payload of the DCI of the PDCCH is an urgent problem to be resolved.

In view of this, embodiments of this application provide a communication method. The communication method in the embodiments of this application is applicable to various communication systems. The communication method provided in embodiments of this application may be applied to a long term evolution (long term evolution, LTE) system, a 5G network, or another similar network, or another future network. FIG. 2 is a schematic diagram of a communication system to which a communication method according to an embodiment of this application is applicable. The communication system may include one network device 10 and one or more terminal devices 20 (FIG. 2 shows only two terminal devices) wirelessly connected to the network device 10. FIG. 2 is merely a schematic diagram, and does not constitute a limitation on an application scenario of the communication method in embodiments of this application.

The network device 10 is a device in a wireless network. For example, the terminal device is connected to a radio access network (radio access network, RAN) node of the wireless network. The RAN node may be specifically: a next generation node (g NodeB, gNB), a transmission reception point (transmission reception point, TRP), an evolved NodeB (evolved NodeB, eNB), and a radio network controller (radio network controller, RNC), a nodeB (NodeB, NB), a base station controller (base station controller, BSC), a base transceiver station (base transceiver station, BTS), a home base station, and a base band unit (base band unit, a BBU) or a wireless fidelity (wireless fidelity, WI-FI) access point (access point, AP), or the like. In a network structure, the network device may include a central unit (centralized unit, CU) node, a distributed unit (distributed unit, DU) node, or a RAN device including the CU node and the DU node.

The terminal device 20, also referred to as user equipment (user equipment, UE), a mobile station (mobile station, MS), a mobile terminal (mobile terminal, MT), or the like, is a device that provides voice/data connectivity to a user, for example, a handheld device having a wireless connection function or a vehicle-mounted device. Currently, the terminal device may be specifically a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The communication system and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

The following describes in detail a communication method provided in embodiments of this application.

It should be noted that names of messages between network elements, names of parameters in messages, or the like in the following embodiments of this application are merely examples, and there may be other names in specific implementation. This is uniformly described herein. Details are not described in the following again.

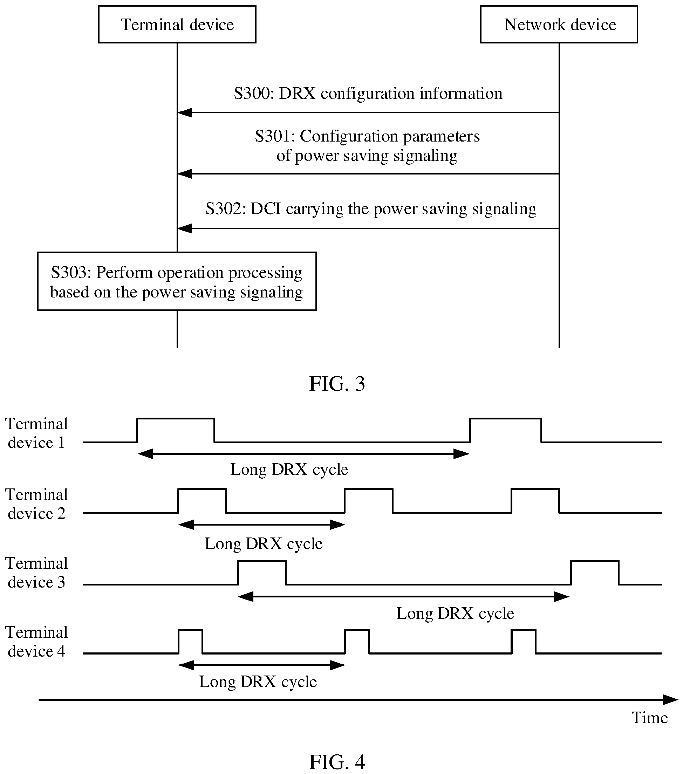

An embodiment of this application provides a communication method. The communication method is applied to a search space set configuration process. Refer to FIG. 3. The communication method includes the following steps.

S300: A network device separately sends DRX configuration information to terminal devices. Correspondingly, the terminal devices each receive the DRX configuration information from the network device.

The DRX configuration information is carried in RRC signaling. The DRX configuration information may include parameters such as a DRX cycle and DRX on duration. Pieces of DRX configuration information of all terminal devices are independent of each other, and parameters such as DRX cycles and DRX on duration of all the terminal devices may be the same or may be different.

There may be two cycle types of the DRX cycle: a long DRX cycle (long DRX cycle, LDC) and a short DRX cycle (short DRX cycle, SDC). When configuring a DRX parameter for the terminal device, the network device needs to configure a parameter of the long DRX cycle, or the network device may configure a parameter of the short DRX cycle.

In a DRX mechanism, each terminal device needs to be configured with a parameter of the long DRX cycle. Cycle lengths of long DRX cycles of different terminal devices may be the same or may be different.

In the DRX mechanism, the short DRX cycle is an optional configuration of a system. In other words, in addition to the long DRX cycle configured for each terminal device, the short DRX cycle may be further configured. For a same terminal device, a cycle length of the long DRX cycle is an integer multiple of a cycle length of the short DRX cycle, and on duration of the long DRX cycle overlaps a part of on duration of the short DRX cycle.

It should be noted that, in embodiments of this application, the long DRX cycle is described as "a DRX cycle of a first cycle type", and the short DRX cycle is described as "a DRX cycle of a second cycle type".

For example, FIG. 4 shows a DRX configuration state. For four terminal devices (a terminal device 1, a terminal device 2, a terminal device 3, and a terminal device 4), cycle types of DRX cycles configured for the four terminal devices are the same. In other words, the four terminal devices each are configured with a DRX cycle of the first cycle type (namely, a long DRX cycle). Cycle lengths of DRX cycles of all terminal devices are different. Start moments and time lengths of on duration of all the terminal devices are also different.

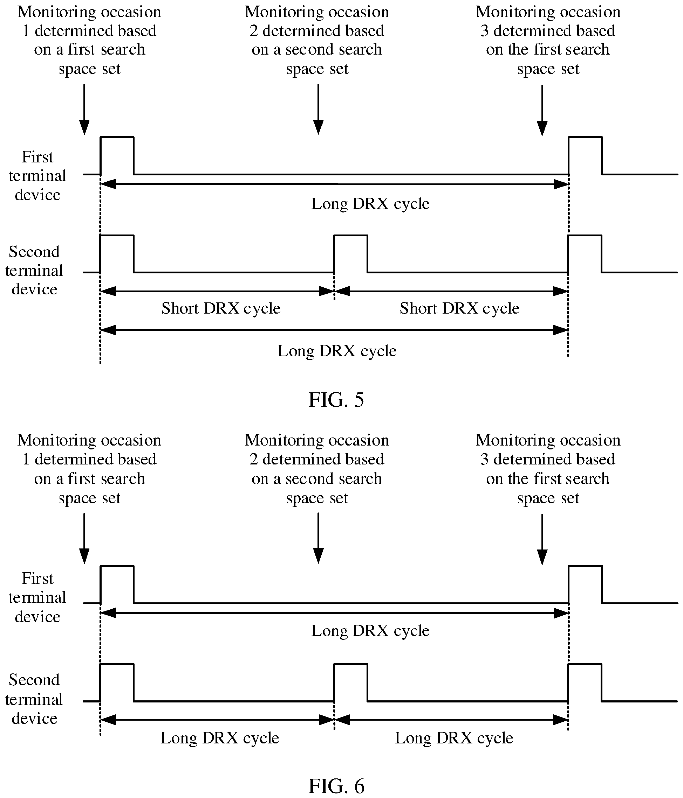

For example, FIG. 5 shows another DRX configuration state. Two terminal devices are denoted as a first terminal device and a second terminal device. The first terminal device is configured with a DRX cycle of the first cycle type (namely, a long DRX cycle). The second terminal device is configured with a DRX cycle of the first cycle type (namely, a long DRX cycle) and a DRX cycle of the second cycle type (namely, a short DRX cycle). For the second terminal device, a cycle length of the DRX cycle of the first cycle type is twice a cycle length of the DRX cycle of the second cycle type. A time length of on duration of the DRX cycle of the first cycle type is the same as a time length of on duration of the DRX cycle of the second cycle type. For the first terminal device and the second terminal device, cycle lengths of the DRX cycles of the first cycle type (namely, the long DRX cycles) of the first terminal device and the second terminal device are the same. Time lengths of the on duration of the first terminal device and the second terminal device are the same.

For example, FIG. 6 shows still another DRX configuration state. Two terminal devices are denoted as a first terminal device and a second terminal device. The first terminal device and the second terminal device each are configured with a DRX cycle of the first cycle type (namely, a long DRX cycle). A cycle length of the DRX cycle of the first terminal device is twice a cycle length of the DRX cycle of the second terminal device. A time length of on duration of the DRX cycle of the first terminal device is the same as a time length of on duration of the DRX cycle of the second terminal device.

It should be noted that, for a terminal device configured with DRX cycles of two cycle types (namely, a DRX cycle of the first cycle type and a DRX cycle of the second cycle type), the terminal device may switch between the DRX cycles of the two cycle types. To be specific, when the terminal device is in the DRX cycle of the first cycle type (namely, a long DRX cycle), if the terminal device does not receive scheduling information in a time period of on duration of the long DRX cycle, the terminal device remains in the long DRX cycle. If the terminal device receives scheduling information in the time period of the on duration of the long DRX cycle, the terminal device starts a DRX-inactivity timer (drx-inactivity timer). After the DRX-inactivity timer expires, the terminal device switches to a short DRX cycle. Alternatively, the network device sends a switching instruction to the terminal device, to indicate the terminal device to use the short DRX cycle. When the terminal device is in the DRX cycle of the second cycle type (namely, a short DRX cycle), if the terminal device does not receive scheduling information within several short DRX cycles, the terminal device switches to the long DRX cycle.

S301: The network device separately sends configuration parameters of power saving signaling to the terminal devices. Correspondingly, the terminal devices each receive the configuration parameter of the power saving signaling from the network device.

The configuration parameter is transmitted by using RRC signaling. The configuration parameter includes a payload of DCI and a search space set.

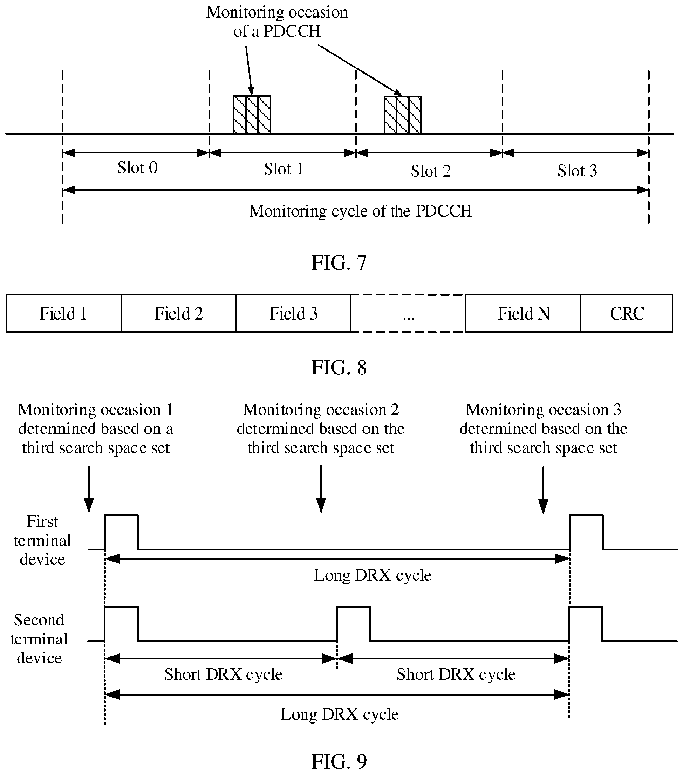

The search space set is used to determine a monitoring occasion of a PDCCH. One search space set is used to determine one or more monitoring occasions for monitoring the PDCCH by the terminal device. Before a time period of DRX on duration, the terminal device may have one or more PDCCH monitoring occasions in one slot, or may have a plurality of PDCCH monitoring occasions in a plurality of slots. For example, FIG. 7 shows a monitoring occasion of the PDCCH in one search space set. In the search space set shown in FIG. 7, a PDCCH monitoring cycle includes four slots, a slot offset within the PDCCH monitoring cycle is 1, on duration of the search space set includes two slots, and a time length of a CORESET includes three symbols. In this case, in a slot 0, a slot 1, a slot 2, and a slot 3, there is one monitoring occasion of the PDCCH in each of the slot 1 and the slot 2, and the PDCCH occupies three symbols in one slot on each monitoring occasion, as indicated by squares filled with diagonal lines in FIG. 7. In this way, the terminal device determines the monitoring occasion (monitoring occasion) of the PDCCH based on the PDCCH monitoring cycle, the slot offset within the PDCCH monitoring cycle, and a PDCCH monitoring pattern within the slot that are configured in the search space set, to monitor the PDCCH.

The payload of the DCI indicates a quantity of bits of the DCI. The DCI carrying the power saving signaling is group common DCI, and bit positions of power saving signaling of different terminal devices in a group may be different in the group common DCI. FIG. 8 shows a format of group common DCI. One piece of group common DCI may include N fields and a cyclic redundancy check (cyclic redundancy check, CRC). Each field is used to carry power saving signaling of one terminal device. FIG. 8 shows N fields, namely, a field 1, a field 2, a field 3, ..., and a field N. The field 1, the field 2, the field 3, and the field N each are corresponding to one solid-line square in FIG. 8, and the dashed-line square indicates fields from a field 4 to a field N-1. The CRC is used for error control, and the CRC is corresponding to one solid-line square in FIG. 8. A payload of the DCI indicates a total quantity of bits of the field 1 to the field N in FIG. 8. The group common DCI is transmitted through a PDCCH.

In this embodiment of this application, the DCI carrying the power saving signaling is the group common DCI. The configuration parameter of the power saving signaling may further include position indication information. The position indication information indicates a bit position of the power saving signaling of the terminal device in the group common DCI, that is, a field position of the power saving signaling of the terminal device in the group common DCI. For example, one group includes two terminal devices, denoted as a first terminal device and a second terminal device. The network device may separately send configuration parameters of power saving signaling to the two terminal devices. Position indication information in the configuration parameter sent to the first terminal device indicates a bit position of the power saving signaling in the group common DCI to the first terminal device. Position indication information in the configuration parameter sent to the second terminal device indicates a bit position of the power saving signaling in the group common DCI to the second terminal device. When the terminal device has a plurality of payloads of the DCI, the configuration parameter of the power saving signaling of the terminal device may further include a plurality of pieces of position indication information. This is because the payloads of the DCI are different. If different pieces of group common DCI use different payloads of the DCI, bit positions of the terminal device in the different pieces of group common DCI are also different. There is a correspondence between position indication information and a payload of DCI. Different pieces of position indication information indicate bit positions of the power saving signaling in pieces of group common DCI of different payloads of DCI to the terminal device. Alternatively, in another possible implementation, the network device and the terminal device determine a bit position of power saving signaling of each terminal device in the group common DCI according to a predefined rule.

Optionally, the DCI carrying the power saving signaling is the group common DCI and is transmitted through the PDCCH. The configuration parameter of the power saving signaling may further include a radio network temporary identifier (radio network temporary identifier, RNTI), and the RNTI is used to scramble the DCI carrying the power saving signaling. RNTIs sent by the network device to one or more terminal devices are the same, so that the one or more terminal devices use the same RNTI to descramble the DCI carrying the power saving signaling. Therefore, the one or more terminal devices to which the same RNTI is allocated may be considered as terminal devices in a same group.

Optionally, the configuration parameter of the power saving signaling may further include content of the power saving signaling carried in the DCI (also referred to as a type of the power saving signaling carried in the DCI). The content (or type) includes one or more of wake up/go-to-sleep indication information, a minimum time unit offset value, a bandwidth part identifier, a maximum quantity of multiple-input multiple-output layers, and reference signal indication information. The content or type of the power saving signaling in the foregoing configuration parameter is applicable to different search space sets (for example, a first search space set or a second search space set). For example, different search space sets are configured with same content of the power saving signaling. To be specific, content (or types) of the power saving signaling carried on the PDCCH in different search space sets may be the same. In another example, different search space sets are configured with corresponding content of the power saving signaling. To be specific, content of the power saving signaling carried on the PDCCH in different search space sets may be different. In still another example, different monitoring occasions may be configured with corresponding content of the power saving signaling. To be specific, on different monitoring occasions (for example, a monitoring occasion before on duration of the long DRX cycle and a monitoring occasion before on duration of a non-long DRX cycle), content of the power saving signaling carried on the PDCCH may be different.

In this way, the terminal device may monitor the PDCCH based on the content of the power saving signaling configured by the network device.

In the configuration parameter of the power saving signaling, the payload of the DCI and the search space set may have the following two configuration manners:
Manner 1: The payload of the DCI is corresponding to the search space set. In the configuration parameters separately sent by the network device to the terminal devices, a configuration parameter or configuration parameters of one or more terminal devices includes/include a plurality of search space sets and a plurality of payloads of DCI. In the plurality of search space sets, at least two search space sets are corresponding to different payloads of DCI. A quantity of search space sets and a quantity of payloads of the DCI may be the same or different.

For example, the network device separately sends configuration parameters of the power saving signaling to two terminal devices (denoted as a first terminal device and a second terminal device). A configuration parameter of the power saving signaling sent to one terminal device (for example, the first terminal device) in the two terminal devices may include one payload of the DCI and one search space set. A configuration parameter of the power saving signaling sent to the other terminal device (for example, the second terminal device) may include two payloads of the DCI and two search space sets. The two payloads of the DCI are respectively indicate payloads used when the PDCCH is transmitted in the two search space sets. Alternatively, a configuration parameter of the power saving signaling sent to the other terminal device (for example, the second terminal device) may include two payloads of the DCI and three search space sets. In the three search space sets, two search space sets are corresponding to one of the two payloads of the DCI, and the third search space set is corresponding to the other of the two payloads of the DCI. In other words, one of the two payloads of the DCI is used when the PDCCH is transmitted in the two search space sets, and the other payload of the DCI is used when the PDCCH is transmitted in the third search space set.

In the manner 1, there are different quantities of terminal devices that need to monitor the PDCCH in different search space sets. Therefore, payloads of DCI corresponding to different search space sets may be different.

For example, only wake up indication information or go-to-sleep indication information is transmitted in the power saving signaling. On a monitoring occasion of a specific search space set, there is a small quantity of terminal devices that need to monitor the PDCCH. In this case, the power saving signaling can be transmitted by using a small payload of the DCI. However, on a monitoring occasion of another search space set, there is a large quantity of terminal devices that need to monitor the PDCCH. In this case, the power saving signaling is transmitted by using a large payload of the DCI. In the conventional technology, when power saving signaling is transmitted to a group of terminal devices through a PDCCH, a same payload of DCI is used to transmit the power saving signaling in different search space sets through the PDCCH. In comparison, in this embodiment of this application, two or more search space sets can be corresponding to different payloads of DCI, to reduce signaling overheads.

It should be noted that, in the configuration parameter of the power saving signaling, the position indication information is related to the payload of the DCI. For a specific terminal device (for example, the second terminal device), if the configuration parameter of the power saving signaling includes two payloads of the DCI (namely, a first DCI payload and a second DCI payload) and two search space sets, the configuration parameter of the power saving signaling also includes two pieces of position indication information (namely, first position indication information and second position indication information). The two pieces of position indication information are in a one-to-one correspondence with the two payloads of the DCI. To be specific, the first position indication information is corresponding to the first DCI payload, and indicates a bit position of the power saving signaling in the group common DCI of the first DCI payload to the terminal device. The second position indication information is corresponding to the second DCI payload, and indicates a bit position of the power saving signaling in the group common DCI of the second DCI payload to the terminal device.

For different terminal devices in a same group, a quantity of search space sets may be the same or may be different. There are two cases that cause the quantity of search space sets to change.

Case 1: The search space set is related to a cycle type of a DRX cycle.

For descriptions of the DRX cycle and the cycle type, refer to related descriptions in S300. Details are not described herein again.

Terminal devices in a same group include a first terminal device and a second terminal device. The configuration parameters of the power saving signaling include a first configuration parameter and a second configuration parameter. The network device sends the first configuration parameter to the first terminal device, where the first configuration parameter is used to configure a configuration parameter required by the first terminal device to monitor the power saving signaling. The network device sends the second configuration parameter to the second terminal device, where the second configuration parameter is used to configure a configuration parameter required by the second terminal device to monitor the power saving signaling. The first terminal device is configured with a DRX cycle of the first cycle type, the second terminal device is configured with a DRX cycle of the first cycle type and a DRX cycle of the second cycle type, and a quantity of search space sets in the first configuration parameter is less than a quantity of search space sets in the second configuration parameter.

A DRX configuration shown in FIG. 5 is used as an example. The first terminal device is configured with the DRX cycle of the first cycle type (namely, the long DRX cycle). The second terminal device is configured with the DRX cycle of the first cycle type (namely, the long DRX cycle) and the DRX cycle of the second cycle type (namely, the short DRX cycle). Cycle lengths of the DRX cycles of the first cycle type (that is, the long DRX cycle) of the first terminal device and the second terminal device are the same. The cycle length of the long DRX cycle of the second terminal device is twice the cycle length of the short DRX cycle. The first configuration parameter includes one search space set, that is, the first configuration parameter includes a first search space set. A PDCCH monitoring cycle of the first search space set is corresponding to the DRX cycle of the first cycle type (namely, the long DRX cycle). As shown in FIG. 5, it may be determined based on the first search space set that monitoring occasions of the PDCCH are a monitoring occasion 1 and a monitoring occasion 3. The second configuration parameter includes two search space sets, that is, the second configuration parameter includes a first search space set and a second search space set. A PDCCH monitoring cycle of the first search space set is corresponding to the DRX cycle of the first cycle type (namely, the long DRX cycle). As shown in FIG. 5, it may be determined based on the first search space set that monitoring occasions of the PDCCH are a monitoring occasion 1 and a monitoring occasion 3. A PDCCH monitoring cycle of the second search space set is corresponding to the DRX cycle of the second cycle type (namely, the short DRX cycle). As shown in FIG. 5, it may be determined based on the second search space set that a monitoring occasion of the PDCCH is a monitoring occasion 2.

Case 2: The search space set is related to a cycle type and a cycle length of a DRX cycle.

For descriptions of the DRX cycle and the cycle type, refer to related descriptions in S300. Details are not described herein again.

Terminal devices in a same group may be denoted as a first terminal device and a second terminal device. The configuration parameters of the power saving signaling include a first configuration parameter and a second configuration parameter. The network device sends the first configuration parameter to the first terminal device, where the first configuration parameter is used to configure a configuration parameter required by the first terminal device to monitor the power saving signaling. The network device sends the second configuration parameter to the second terminal device, where the second configuration parameter is used to configure a configuration parameter required by the second terminal device to monitor the power saving signaling. Cycle types of DRX cycles of the first terminal device and the second terminal device are the same. A cycle length of the DRX cycle of the first terminal device is greater than a cycle length of the DRX cycle of the second terminal device. A quantity of search space sets in the first configuration parameter is less than a quantity of search space sets in the second configuration parameter.

A DRX configuration shown in FIG. 6 is used as an example. The first terminal device and the second terminal device each are configured with the DRX cycle of the first cycle type (namely, the long DRX cycle). The cycle length of the DRX cycle of the first terminal device is twice the cycle length of the DRX cycle of the second terminal device. The first configuration parameter includes one search space set, that is, the first configuration parameter includes a first search space set. A PDCCH monitoring cycle of the first search space set is corresponding to a DRX cycle with a longer cycle length. It may be determined that monitoring occasions of the PDCCH are a monitoring occasion 1 and a monitoring occasion 3. The second configuration parameter includes two search space sets, that is, the second configuration parameter includes a first search space set and a second search space set. A PDCCH monitoring cycle of the first search space set is corresponding to a DRX cycle with a longer cycle length. It may be determined that monitoring occasions of the PDCCH are a monitoring occasion 1 and a monitoring occasion 3. A PDCCH monitoring cycle of the second search space set is corresponding to a DRX cycle with a shorter cycle length. It may be determined that a monitoring occasion of the PDCCH is a monitoring occasion 2.

In the configuration parameters of the power saving signaling, the other configuration manner of the payload of the DCI and the search space set may be as follows:
Manner 2: The payload of the DCI is corresponding to the monitoring occasion. In the configuration parameters of the power saving signaling separately sent by the network device to the terminal devices, a configuration parameter or configuration parameters of the power saving signaling of one or more terminal devices includes/include one or more search space sets and a plurality of payloads of DCI. The search space set is used to determine one or more monitoring occasions for monitoring the PDCCH by the terminal device. In the one or more search space sets, at least two monitoring occasions are corresponding to different payloads of DCI. To be specific, when the DCI carrying the power saving signaling is transmitted through the PDCCH on the at least two monitoring occasions, DCI payloads used for the DCI on the at least two monitoring occasions are different. Specifically, there may be two scenarios:
Scenario 1: At least two monitoring occasions in one search space set are corresponding to different payloads of DCI.

For example, the network device separately sends configuration parameters of the power saving signaling to two terminal devices (denoted as a first terminal device and a second terminal device). The configuration parameters of the power saving signaling sent to the two terminal devices each include one search space set. Specifically, a configuration parameter of the power saving signaling sent to one terminal device (for example, the first terminal device) in the two terminal devices includes one payload of the DCI. When the network device sends the power saving signaling to the first terminal device, one payload of the DCI is used on a monitoring occasion of one search space set through the PDCCH. A configuration parameter of the power saving signaling sent to the other terminal device (for example, the second terminal device) in the two terminal devices includes two payloads of the DCI, where the two payloads of the DCI are corresponding to different monitoring occasions. When the network device sends the power saving signaling to the second terminal device, in three monitoring occasions in one search space set, the PDCCH may be corresponding to one payload of the DCI on two monitoring occasions, and the PDCCH is corresponding to the other payload of the DCI on the other monitoring occasion.

Scenario 2: At least two monitoring occasions in a plurality of search space sets are corresponding to different payloads of DCI. Specifically, different monitoring occasions are corresponding to different payloads of DCI, and these monitoring occasions may be corresponding to a same search space set or may be corresponding to different search space sets.

For example, the network device separately sends configuration parameters of the power saving signaling to two terminal devices (denoted as a first terminal device and a second terminal device). Specifically, a configuration parameter of the power saving signaling sent to one terminal device (for example, the first terminal device) in the two terminal devices includes one search space set and one payload of the DCI. When the network device sends the power saving signaling to the first terminal device, a same payload of the DCI, namely, the payload of the DCI in the foregoing configuration parameter is used through the PDCCH on a monitoring occasion of the search space set. A configuration parameter of the power saving signaling sent to one terminal device (for example, the second terminal device) in the two terminal devices includes two search space sets and two payloads of the DCI. When the network device transmits the power saving signaling to the second terminal device, on a part of monitoring occasions of the two search space sets, one payload of the DCI in the configuration parameter is used through the PDCCH. These monitoring occasions may belong to different search space sets, or may belong to a same search space set. On the other part of monitoring occasions, the other payload of the DCI in the configuration parameter is used through the PDCCH. These monitoring occasions may belong to different search space sets, or may belong to a same search space set.

In the manner 2, there are different quantities of terminal devices that need to monitor the PDCCH on different monitoring occasions. Therefore, payloads of DCI of the PDCCH on different monitoring occasions may be different.

For example, only wake up indication information or go-to-sleep indication information is transmitted in the power saving signaling. On a specific monitoring occasion, there is a small quantity of terminal devices that need to monitor the PDCCH. In this case, the power saving signaling can be transmitted by using a small payload of the DCI. However, on another monitoring occasion, there is a large quantity of terminal devices that need to monitor the PDCCH. In this case, the power saving signaling is transmitted by using a large payload of the DCI. In the conventional technology, when power saving signaling is transmitted to a group of terminal devices through a PDCCH, a same payload of DCI is used to transmit the power saving signaling on different monitoring occasions through the PDCCH. In comparison, in this embodiment of this application, two or more monitoring occasions can be corresponding to different payloads of DCI, so that the payloads of the DCI are flexibly configured. This reduces signaling overheads.

It should be noted that, in the configuration parameter of the power saving signaling, the position indication information is related to the payload of the DCI. For a specific terminal device (for example, the second terminal device), if the configuration parameter of the power saving signaling includes two payloads of the DCI (namely, a first DCI payload and a second DCI payload) and a plurality of monitoring occasions, the configuration parameter of the power saving signaling also includes two pieces of position indication information (namely, first position indication information and second position indication information). The two pieces of position indication information are in a one-to-one correspondence with the two payloads of the DCI. The first position indication information is corresponding to the first DCI payload, and the first position indication information indicates a bit position of the power saving signaling in the group common DCI of the first DCI payload to the second terminal device. The second position indication information is corresponding to the second DCI payload, and the second position indication information indicates a bit position of the power saving signaling in the group common DCI of the second DCI payload to the second terminal device.

The following uses "at least two monitoring occasions in one search space set are corresponding to different payloads of DCI" as an example for description.

For different terminal devices in a same group, in one search space set, payloads of DCI corresponding to at least two monitoring occasions are different. There are two cases for a monitoring occasion that causes the payload of the DCI to change.

Case 1: The monitoring occasion is related to a cycle type of a DRX cycle.

Terminal devices in a same group may be denoted as a first terminal device and a second terminal device. The configuration parameters of the power saving signaling include a first configuration parameter and a second configuration parameter. The first configuration parameter is used to configure a configuration parameter required by the first terminal device to monitor the power saving signaling, and the second configuration parameter is used to configure a configuration parameter required by the second terminal device to monitor the power saving signaling. The first terminal device and the second terminal device each are configured with a DRX cycle of the first cycle type (namely, a long DRX cycle). The second terminal device is further configured with a DRX cycle of the second cycle type (namely, a short DRX cycle). A first monitoring occasion is a monitoring occasion before on duration of the DRX cycle of the first cycle type, and is corresponding to a first DCI payload. A second monitoring occasion is a monitoring occasion before on duration of a DRX cycle of a non-first cycle type, and is corresponding to a second DCI payload. The first DCI payload and the second DCI payload are different.

The on duration of the DRX cycle of the non-first cycle type may be on duration that does not overlap with the on duration of the DRX cycle of the first cycle type in a plurality of pieces of on duration of the DRX cycle of the second cycle type.

For example, FIG. 9 is used as an example. The first terminal device and the second terminal device each are configured with a long DRX cycle. Cycle lengths of the long DRX cycles of the first terminal device and the second terminal device are the same. The second terminal device is further configured with a short DRX cycle, and the cycle length of the long DRX cycle is twice a cycle length of the short DRX cycle. The first configuration parameter includes one search space set (denoted as a third search space set) and one payload of DCI. The third search space set is used to determine a monitoring occasion for monitoring the PDCCH by the first terminal device, where the monitoring occasion is denoted as a first monitoring occasion. The second configuration parameter includes one search space set (denoted as the third search space set) and two payloads of DCI. The third search space set is used to determine monitoring occasions for monitoring the PDCCH by the second terminal device, where the monitoring occasions are denoted as a first monitoring occasion and a second monitoring occasion. The first monitoring occasion is a monitoring occasion before on duration of the DRX cycle of the first cycle type, for example, a monitoring occasion 1 and a monitoring occasion 3 in FIG. 9, and is corresponding to the first DCI payload. The second monitoring occasion is a monitoring occasion before on duration of a DRX cycle of the non-first cycle type, for example, a monitoring occasion 2 in FIG. 9, and is corresponding to the second DCI payload. The monitoring occasion may be determined by configuring a PDCCH monitoring cycle of the third search space set. The PDCCH monitoring cycle of the third search space set is related to the DRX cycle of the first cycle type (namely, the long DRX cycle) and a DRX cycle length. Alternatively, the monitoring occasion may be determined by using a configuration offset value. The configuration offset value indicates a time offset value between a monitoring occasion of the power saving signaling and a start position of on duration of a DRX cycle.

On the first monitoring occasion (for example, the monitoring occasion 1 and the monitoring occasion 3 in FIG. 9), there are two terminal devices that need to monitor the PDCCH, namely, the first terminal device and the second terminal device. On the second monitoring occasion (for example, the monitoring occasion 2 in FIG. 9), there is one terminal device that needs to monitor the PDCCH, namely, the second terminal device. On the first monitoring occasion (for example, the monitoring occasion 1 or the monitoring occasion 3 in FIG. 9) and on the second monitoring occasion (for example, the monitoring occasion 2 in FIG. 9), quantities of terminal devices that need to monitor the PDCCH are different. Therefore, the first DCI payload and the second DCI payload may be different.

Case 2: The monitoring occasion is related to a cycle type and a cycle length of a DRX cycle.

Terminal devices in a same group may be denoted as a first terminal device and a second terminal device. The configuration parameters of the power saving signaling include a first configuration parameter and a second configuration parameter. The first configuration parameter is used to configure a configuration parameter required by the first terminal device to monitor the power saving signaling, and the second configuration parameter is used to configure a configuration parameter required by the second terminal device to monitor the power saving signaling. Cycle types of DRX cycles of the first terminal device and the second terminal device are the same. A cycle length of the DRX cycle of the first terminal device is greater than a cycle length of the DRX cycle of the second terminal device. A first monitoring occasion is a monitoring occasion before on duration of a long DRX cycle with a longer cycle length, and is corresponding to a first DCI payload. A second monitoring occasion is a monitoring occasion before on duration of a long DRX cycle with a shorter cycle length, and is corresponding to a second DCI payload. The first DCI payload and the second DCI payload are different.

It should be noted that the network device may first perform S300 and then perform S301, or may first perform S301 and then perform S300, or may simultaneously perform S300 and S301. A sequence for performing S300 and S301 is not limited herein.

S302: The network device sends the DCI carrying the power saving signaling to the terminal device through the PDCCH based on the payload of the DCI and/or the search space set. Correspondingly, the terminal device receives the DCI carrying the power saving signaling from the network device through the PDCCH based on the payload of the DCI and/or the search space set.

The DCI carrying the power saving signaling is group common DCI. The network device sends the power saving signaling to a group of terminal devices in a form of the group common DCI.

One group of terminal devices may include two terminal devices, namely, a first terminal device and a second terminal device. A first configuration parameter is used to configure a configuration parameter required by the first terminal device to monitor the power saving signaling, and a second configuration parameter is used to configure a configuration parameter required by the second terminal device to monitor the power saving signaling. A configuration state of the payload of the DCI and the search space set may have two manners (a manner 1 and a manner 2). A specific implementation process of S302 is described in different manners.

Manner 1: A power saving parameter of at least one terminal device includes a plurality of search space sets and a plurality of payloads of DCI, and at least two search space sets are corresponding to different payloads of DCI. The search space sets corresponding to different payloads of DCI are denoted as a first search space set and a second search space set.

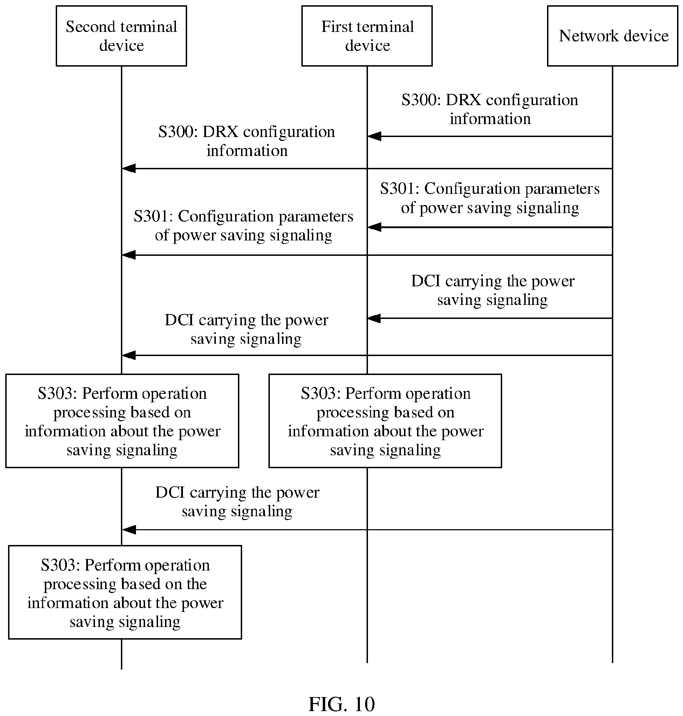

Refer to FIG. 10. S302 may be specifically implemented as follows:
The network device sends, in the first search space set, the DCI carrying the power saving signaling to the terminal device through the PDCCH. Correspondingly, each terminal device configured with the first search space set each receives, in the first search space set, the DCI carrying the power saving signaling from the network device through the PDCCH. A terminal device that is not configured with the first search space set does not need to receive, in the first search space set, the DCI carrying the power saving signaling from the network device through the PDCCH. Herein, the payload of the DCI carrying the power saving signaling is denoted as a first DCI payload.

The network device sends, in the second search space set, the DCI carrying the power saving signaling to the terminal device through the PDCCH. Correspondingly, a terminal device configured with the second search space set receives, in the second search space set, the DCI carrying the power saving signaling from the network device through the PDCCH. A terminal device that is not configured with the second search space set does not need to receive, in the second search space set, the DCI carrying the power saving signaling from the network device through the PDCCH. Herein, the payload of the DCI carrying the power saving signaling is denoted as a second DCI payload. The first DCI payload and the second DCI payload are different.

In this way, in the configuration parameters separately sent by the network device to the terminal devices, when configuration parameters of one or more terminal devices include a plurality of search space sets and a plurality of DCI payloads, the network device sends, in the plurality of search space sets, the DCI carrying the power saving signaling to the terminal device through the PDCCH. Payloads of DCI corresponding to at least two search space sets in the plurality of search space sets are different. In the conventional technology, for group common DCI of a specific function, different search space sets are all corresponding to one payload of DCI, resulting in high signaling overheads. In comparison, in this embodiment of this application, payloads of DCI corresponding to at least two search space sets in the plurality of search space sets are different, so that signaling overheads can be reduced.

It should be noted that, the power saving signaling is transmitted through the PDCCH on a monitoring occasion of the search space set, and the monitoring occasion is before on duration of a DRX cycle. The on duration occurs periodically. The following uses two scenarios (a scenario 1 and a scenario 2) as examples for description.

Scenario 1: Some of a group of terminal devices are configured with DRX cycles of two cycle types. FIG. 5 is used as an example. In the DRX cycle configuration shown in FIG. 5, the first terminal device and the second terminal device each are configured with the DRX cycle of the first cycle type (namely, the long DRX cycle). The second terminal device is further configured with the DRX cycle of the second cycle type (namely, the short DRX cycle). In this scenario, S302 may be specifically implemented as follows:
Before on duration corresponding to the DRX cycle of the first cycle type, the network device sends, on a monitoring occasion of the first search space set, the DCI carrying the power saving signaling to the terminal device through the PDCCH. Correspondingly, before the on duration corresponding to the DRX cycle of the first cycle type, a terminal device configured with the first search space set (the first terminal device and the second terminal device) receives, on the monitoring occasion of the first search space set, the DCI carrying the power saving signaling from the network device through the PDCCH. As shown in FIG. 5, the monitoring occasion of the first search space set may be the monitoring occasion 1 or the monitoring occasion 3.

Before on duration corresponding to a DRX cycle of a non-first cycle type, the network device sends, on a monitoring occasion of the second search space set, the DCI carrying the power saving signaling to the terminal device through the PDCCH. Correspondingly, before the on duration corresponding to the DRX cycle of the non-first cycle type, a terminal device configured with the second search space set (the second terminal device) further needs to receive, on the monitoring occasion of the second search space set, the DCI carrying the power saving signaling from the network device through the PDCCH. Before the on duration corresponding to the DRX cycle of the non-first cycle type, a terminal device that is not configured with the second search space set (the first terminal device) does not need to receive, on the monitoring occasion of the second search space set, the DCI carrying the power saving signaling from the network device through the PDCCH. As shown in FIG. 5, the monitoring occasion of the second search space set may be the monitoring occasion 2.

The on duration corresponding to the DRX cycle of the non-first cycle type is on duration that does not overlap with the on duration of the DRX cycle of the first cycle type in a plurality of pieces of on duration of the DRX cycle of the second cycle type.

Scenario 2: A group of terminal devices are configured with DRX cycles of one cycle type, but cycle lengths of the DRX cycles are different. FIG. 6 is used as an example. In the DRX cycle configuration shown in FIG. 6, the first terminal device and the second terminal device each are configured with the DRX cycle of the first cycle type (namely, the long DRX cycle). A cycle length of the long DRX cycle of the first terminal device is greater than a cycle length of the long DRX cycle of the second terminal device. The network device configures different quantities of search space sets for terminal devices corresponding to different cycle lengths of DRX cycles. Monitoring occasions of different search space sets are before different on duration. In this scenario, S302 may be specifically implemented as follows:
Before on duration of a DRX cycle, the network device sends, on a monitoring occasion of the first search space set, the DCI carrying the power saving signaling to the terminal device through the PDCCH. Correspondingly, before the on duration of the DRX cycle, each terminal device configured with the first search space set (the first terminal device and the second terminal device) receives, on the monitoring occasion of the first search space set, the DCI carrying the power saving signaling from the network device through the PDCCH. As shown in FIG. 6, the monitoring occasion of the first search space set may be the monitoring occasion 1 or the monitoring occasion 3.

Before the on duration of the DRX cycle, the network device further needs to send, on the monitoring occasion of the second search space set, the DCI carrying the power saving signaling to some terminal devices in the group through the PDCCH. Correspondingly, before the on duration of the DRX cycle, a terminal device configured with the second search space set (the second terminal device) receives, on the monitoring occasion of the second search space set, the DCI carrying the power saving signaling from the network device through the PDCCH. Before the on duration of the DRX cycle, a terminal device that is not configured with the second search space set (the first terminal device) does not need to receive, on the monitoring occasion of the second search space set, the DCI carrying the power saving signaling from the network device through the PDCCH. As shown in FIG. 6, the monitoring occasion of the second search space set may be the monitoring occasion 2.

Manner 2: At least two monitoring occasions in one or more search space sets are corresponding to different payloads of DCI. The monitoring occasions corresponding to different payloads of DCI are denoted as a first monitoring occasion and a second monitoring occasion.

Refer to FIG. 10. S302 may be specifically implemented as follows:
The network device sends, on the first monitoring occasion, the DCI carrying the power saving signaling to the terminal device through the PDCCH. Correspondingly, each terminal device configured with the first monitoring occasion receives, on the first monitoring occasion, the DCI carrying the power saving signaling from the network device through the PDCCH. A terminal device that is not configured with the first monitoring occasion does not need to receive, on the first monitoring occasion, the DCI carrying the power saving signaling from the network device through the PDCCH. Herein, the payload of the DCI carrying the power saving signaling is denoted as a first DCI payload.

The network device sends, on the second monitoring occasion, the DCI carrying the power saving signaling to the terminal device through the PDCCH. Correspondingly, a terminal device configured with the second monitoring occasion further receives, on the second monitoring occasion, the DCI carrying the power saving signaling from the network device through the PDCCH. A terminal device that is not configured with the second monitoring occasion does not need to receive, on the second monitoring occasion, the DCI carrying the power saving signaling from the network device through the PDCCH. Herein, the payload of the DCI carrying the power saving signaling is denoted as a second DCI payload. The first DCI payload and the second DCI payload are different.

In this way, in the configuration parameters separately sent by the network device to the terminal devices, when a configuration parameter of at least one terminal device includes one or more search space sets and a plurality of DCI payloads, the network device sends, on a plurality of monitoring occasions, the DCI carrying the power saving signaling to the terminal device through the PDCCH. Payloads of DCI corresponding to at least two of the plurality of monitoring occasions are different, so that the payloads of the DCI are flexibly configured. This reduces signaling overheads.

It should be noted that, the power saving signaling is transmitted through the PDCCH on different monitoring occasions, and the monitoring occasion is before the on duration of the DRX cycle. The on duration occurs periodically. The following uses a scenario as an example for description.

Some of a group of terminal devices are configured with DRX cycles of two cycle types. FIG. 9 is used as an example. In the DRX cycle configuration shown in FIG. 9, the first terminal device and the second terminal device each are configured with the DRX cycle of the first cycle type (namely, the long DRX cycle). The second terminal device is further configured with the DRX cycle of the second cycle type (namely, the short DRX cycle). In this scenario, S302 may be specifically implemented as follows:
Before on duration corresponding to the DRX cycle of the first cycle type, the network device sends, on a first monitoring occasion, the DCI carrying the power saving signaling to the terminal device through the PDCCH. Correspondingly, a terminal device configured with the first monitoring occasion (the first terminal device and the second terminal device) receives, on the first monitoring occasion, the DCI carrying the power saving signaling from the network device through the PDCCH. The first monitoring occasion may be the monitoring occasion 1 or the monitoring occasion 3 in FIG. 9.

Before on duration corresponding to a DRX cycle of a non-first cycle type, the network device sends, on a second monitoring occasion, the DCI carrying the power saving signaling to the terminal device through the PDCCH. Correspondingly, a terminal device configured with the second monitoring occasion (the second terminal device) further needs to receive, on the second monitoring occasion, the DCI carrying the power saving signaling from the network device through the PDCCH. Before the on duration corresponding to the DRX cycle of the non-first cycle type, a terminal device that is not configured with the second monitoring occasion (the first terminal device) does not need to receive, on the second monitoring occasion, the DCI carrying the power saving signaling from the network device through the PDCCH. For "on duration corresponding to the DRX cycle of the non-first cycle type", refer to related descriptions in the scenario 1 in the manner 1. Details are not described herein again.

In the foregoing two manners, in different search space sets or on different monitoring occasions, a quantity of terminal devices that need to monitor the PDCCH is different, so that the payload of the DCI changes. Specifically, the manner 1 is used as an example. In the first search space set, there are two terminal devices that need to monitor the PDCCH, namely, the first terminal device and the second terminal device. Therefore, in the first search space set, the group common DCI carrying the power saving signaling includes two pieces of power saving signaling, which are information indicating whether the first terminal device monitors the PDCCH and information indicating whether the second terminal device monitors the PDCCH. In the second search space set, there is one terminal device that needs to monitor the PDCCH, namely, the second terminal device. Therefore, in the second search space set, the group common DCI carrying the power saving signaling includes one power saving signaling, which is information indicating whether the second terminal device monitors the PDCCH. Therefore, the first DCI payload and the second DCI payload are different.

In addition, in different search space sets or on different monitoring occasions, content of transmitted power saving signaling may be different or the same.

Different content of power saving signaling may also be described as different types of the power saving signaling. For example, content of first power saving signaling and content of second power saving signaling are different. The content of the first power saving signaling is information indicating whether to monitor the PDCCH. For example, the first power saving signaling includes wake up indication information or go-to-sleep indication information. In addition to information indicating whether to monitor the PDCCH, the content of the second power saving signaling may further include at least one or more of the following information: a minimum time unit offset value of a PDSCH, a minimum time unit offset value of a PUSCH, a BWP identifier, a maximum quantity of MIMO layers, and reference signal indication information. Compared with the content of the first power saving signaling, the content of the second power saving signaling may further include at least other information in addition to the information indicating whether to monitor the PDCCH. In this way, a quantity of bits of the second power saving signaling increases, and the first DCI payload and the second DCI payload are different.

Same content of power saving signaling may also be described as a same type of the power saving signaling. The same content of the power saving signaling may mean that the power saving signaling includes same information. For example, content of power saving signaling in different search space sets or on different monitoring occasions includes information indicating whether to monitor the PDCCH, or content of power saving signaling in different search space sets or on different monitoring occasions includes a minimum time unit offset value of the PDSCH, or content of two pieces of power saving signaling includes a BWP identifier and a maximum quantity of MIMO layers. The payload of the DCI changes in another manner: In a plurality of search space sets, content of power saving signaling transmitted on at least two search space sets may be different. The network device separately configures, for the terminal device in configuration parameters of the power saving signaling, content of monitoring the power saving signaling in the search space sets. Alternatively, in a plurality of monitoring occasions, content of power saving signaling transmitted on at least two monitoring occasions may be different. The network device separately configures, for the terminal device in configuration parameters of the power saving signaling, content of monitoring the power saving signaling on the monitoring occasions, for example, content of monitoring the power saving signaling on a monitoring occasion before on duration of a long DRX cycle, and content of monitoring the power saving signaling on a monitoring occasion before on duration of a non-long DRX cycle.

The following describes a specific implementation process of S302 in two cases.

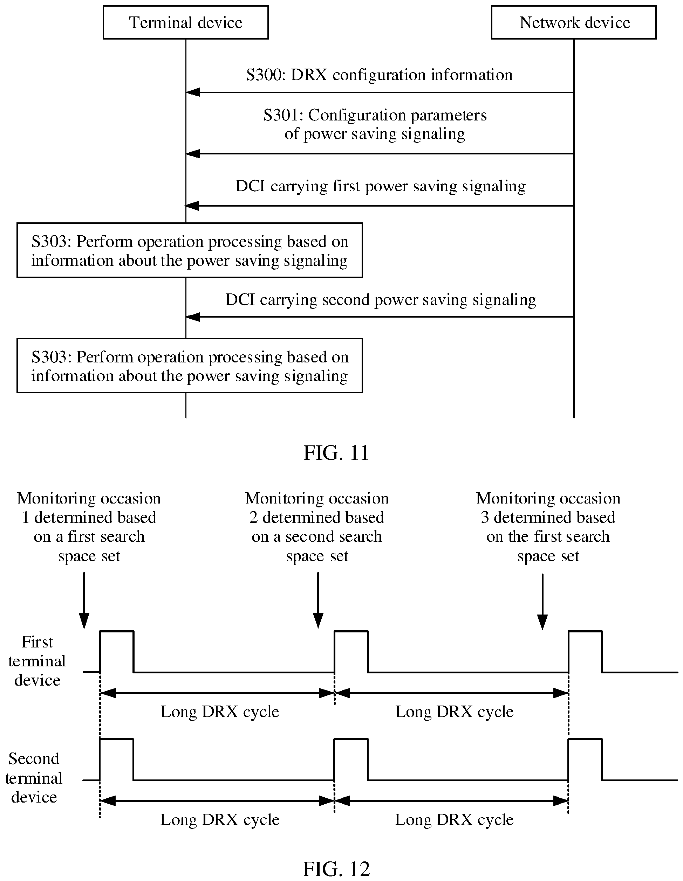

Case 1: In a plurality of search space sets, content of power saving signaling transmitted on at least two search space sets may be different. Two terminal devices may be configured with two search space sets, to transmit power saving signaling of different content, which is corresponding to different payloads of DCI. The two search space sets are a first search space set and a second search space set. Refer to FIG. 11. S302 may be specifically implemented as follows:
The network device sends, on a monitoring occasion of the first search space set, DCI carrying first power saving signaling to the terminal device through the PDCCH. Correspondingly, a terminal device configured with the first search space set each receives, on the monitoring occasion of the first search space set, the DCI carrying the first power saving signaling from the network device through the PDCCH. Herein, a payload of the DCI carrying the first power saving signaling is denoted as a first DCI payload.

The network device sends, on a monitoring occasion of the second search space set, DCI carrying second power saving signaling to the terminal device through the PDCCH. Correspondingly, a terminal device configured with the second search space set receives, on the monitoring occasion of the second search space set, the DCI carrying the second power saving signaling from the network device through the PDCCH. Herein, a payload of the DCI carrying the second power saving signaling is denoted as a second DCI payload. The first power saving signaling and the second power saving signaling are different.

FIG. 12 is used as an example. In a DRX cycle configuration shown in FIG. 12, the first terminal device and the second terminal device each are configured with a DRX cycle of the first cycle type (namely, a long DRX cycle). Cycle lengths of the long DRX cycles of the two terminal devices are the same. Start moments and time lengths of on duration of the long DRX cycles of the two terminal devices are the same. The monitoring occasion determined by using the first search space set is a monitoring occasion before first on duration and third on duration, for example, a monitoring occasion 1 and a monitoring occasion 3. The monitoring occasion determined by using the second search space set is an occasion before second on duration, for example, a monitoring occasion 2.

In this way, content of the power saving signaling may change. When a payload of DCI is corresponding to a search space set, two or more search space sets may have different payloads of DCI. The network device may also indicate different information in different search space sets, in other words, transmit power saving signaling of different content in different search space sets. In the conventional technology, in different search space sets, payloads of DCI of power saving signaling transmitted by a network device to a group of terminal devices are the same. In comparison, in this embodiment of this application, indication information of power saving signaling transmitted on two or more search space sets may be different, and different payloads of DCI may be used. This helps reduce signaling overheads.

Case 2: In one or more search space sets, and content of power saving signaling transmitted on at least two monitoring occasions may be different, and is corresponding to different payloads of DCI. Both the two terminal devices have a plurality of monitoring occasions, and power saving signaling of different content may be transmitted on different monitoring occasions. The two monitoring occasions are a first monitoring occasion and a second monitoring occasion. Refer to FIG. 11. S302 may be specifically implemented as follows:
The network device sends, on the first monitoring occasion, DCI carrying first power saving signaling to the terminal device through the PDCCH. Correspondingly, a terminal device configured with the first monitoring occasion receives, on the first monitoring occasion, the DCI carrying the first power saving signaling from the network device through the PDCCH. Herein, a payload of the DCI carrying the first power saving signaling is denoted as a first DCI payload.

The network device sends, on the second monitoring occasion, DCI carrying second power saving signaling to the terminal device through the PDCCH. Correspondingly, a terminal device configured with the second monitoring occasion further receives, on the second monitoring occasion, the DCI carrying the second power saving signaling from the network device through the PDCCH. A terminal device that is not configured with the second monitoring occasion does not need to receive, on the second monitoring occasion, the DCI carrying the second power saving signaling from the network device through the PDCCH. Herein, a payload of the DCI carrying the second power saving signaling is denoted as a second DCI payload. The first power saving signaling and the second power saving signaling are different.

FIG. 9 is used as an example. In the DRX cycle configuration shown in FIG. 9, the first terminal device and the second terminal device each are configured with the DRX cycle of the first cycle type (namely, the long DRX cycle). The second terminal device is further configured with the DRX cycle of the second cycle type (namely, the short DRX cycle). The first monitoring occasion is a monitoring occasion before on duration of the DRX cycle of the first cycle type, for example, the monitoring occasion 1 and the monitoring occasion 3. Both the first terminal device and the second terminal device receive, on the first monitoring occasion, the DCI carrying the first power saving signaling from the network device through the PDCCH. The second monitoring occasion is a monitoring occasion before on duration of a DRX cycle of a non-first cycle type, for example, the monitoring occasion 2. The second terminal device receives, on the second monitoring occasion, the DCI carrying the second power saving signaling from the network device through the PDCCH. The first terminal device does not need to receive, on the second monitoring occasion, the DCI carrying the second power saving signaling from the network device through the PDCCH.

In this way, content of the power saving signaling may change. At least two monitoring occasions may have different payloads of DCI. The network device may transmit power saving signaling of different content on different monitoring occasions. In the conventional technology, on different monitoring occasions, payloads of DCI of power saving signaling transmitted by the network device to a group of terminal devices are the same. In comparison, in this embodiment of this application, indication information of power saving signaling transmitted on at least two monitoring occasions may be different, and different payloads of DCI may be used. This further reduces signaling overheads.

S303: The terminal device performs operation processing based on information about the power saving signaling.

For example, the terminal device monitors the PDCCH in a time period of on duration based on wake up indication information in the received power saving signaling, or remains in a sleep state in the time period of the on duration based on go-to-sleep indication information in the received power saving signaling, or receives a channel state indicator reference signal (channel state indicator reference signal, CSI-RS) or sends a sounding reference signal (sounding reference signal, SRS) based on indication information of a reference signal in the received power saving signaling, or performs measurement based on a CSI-RS.

According to the communication method provided in embodiments of this application, the network device separately sends the configuration parameters of the power saving signaling to terminal devices. Then, the network device sends the DCI carrying the power saving signaling to the terminal device through the PDCCH based on the payload of the DCI and/or the search space set. The configuration parameter of the power saving signaling includes the payload of the DCI and the search space set. The payload of the DCI indicates a quantity of bits of the DCI. The DCI is used to carry the power saving signaling and is transmitted through the PDCCH. The search space set is used to determine a monitoring occasion of the PDCCH. In the configuration parameters separately sent to the terminal devices, a configuration parameter of at least one terminal device includes one or more search space sets and a plurality of payloads of DCI. In the conventional technology, group common DCI of a specific function has only one payload of DCI, and signaling overheads are high. In comparison, in the communication method in embodiments of this application, in the configuration parameters separately sent by the network device to the terminal devices, a configuration parameter of at least one terminal device includes one or more search space sets and a plurality of payloads of DCI. In this way, the network device can configure different quantities of search space sets for the at least one terminal device, and there may be a plurality of payloads of DCI, so that the payloads of the DCI are flexibly configured. The network device uses different payloads of DCI in different search space sets or on different monitoring occasions. This helps reduce signaling overheads.

The foregoing mainly describes the solutions provided in embodiments of this application from a perspective of interaction between different network elements. It may be understood that, to implement the foregoing functions, the network device and the terminal device include corresponding hardware structures and/or software modules for implementing the functions. With reference to units and algorithm steps of the examples described in the embodiments disclosed in this application, embodiments of this application can be implemented in a form of hardware or hardware and computer software. Whether a function is performed by hardware or hardware driven by computer software depends on a particular application and a design constraint of the technical solutions. A person skilled in the art may use different methods to implement the described functions for each particular application, but it should not be considered that the implementation falls beyond the scope of the technical solutions in embodiments of this application.

In embodiments of this application, the communication apparatus may be divided into functional units based on the foregoing method example. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into units is an example, and is merely logical function division. During actual implementation, another division manner may be used.

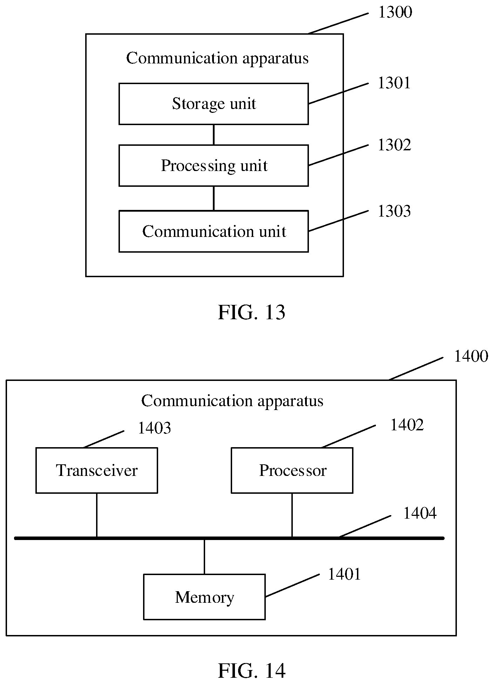

FIG. 13 is a schematic block diagram of a communication apparatus according to an embodiment of this application. The communication apparatus 1300 may exist in a form of software; or may be a device, or a component (for example, a chip system) in a device. The communication apparatus 1300 includes a storage unit 1301, a processing unit 1302, and a communication unit 1303.

The communication unit 1303 may be further divided into a sending unit (not shown in FIG. 13) and a receiving unit (not shown in FIG. 13). The sending unit is configured to support the communication apparatus 1300 in sending information to another network element. The receiving unit is configured to support the communication apparatus 1300 in receiving information from another network element.

The storage unit 1301 is configured to store program code and data of the apparatus 1300, where the data may include but is not limited to original data, intermediate data, or the like.

The processing unit 1302 may be a processor or a controller, for example, may be a CPU, a general purpose processor, a DSP, an ASIC, an FPGA or another programmable logic device, a transistor logic device, a hardware component, or any combination thereof. The processing unit 1302 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The communication unit 1303 may be a communication interface, a transceiver, a transceiver circuit, or the like. The communication interface is a general name. In a specific implementation, the communication interface may include a plurality of interfaces, for example, an interface between terminals and/or another interface.

The storage unit 1301 may be a memory.

When the processing unit 1302 is the processor, the communication unit 1303 is the communication interface, and the storage unit 1301 is the memory, a communication apparatus 1400 in this embodiment of this application may be shown in FIG. 14.

Refer to FIG. 14. The communication apparatus 1400 includes a processor 1402, a transceiver 1403, and a memory 1401.

When the communication apparatus 1400 is used as a network device, the transceiver is configured to separately send configuration parameters of power saving signaling to terminal devices. The transceiver is further configured to send DCI carrying the power saving signaling to the terminal device through a PDCCH. The processor is configured to enable, based on a payload of the DCI and/or a search space set, the transceiver to send the DCI carrying the power saving signaling to the terminal device through the PDCCH. The configuration parameter of the power saving signaling includes the payload of the downlink control information DCI and the search space set. The payload of the DCI indicates a quantity of bits of the DCI. The DCI is used to carry the power saving signaling and is transmitted through the physical downlink control channel PDCCH. The search space set is used to determine a monitoring occasion of the PDCCH. In the configuration parameters separately sent to the terminal devices, a configuration parameter of at least one terminal device includes one or more search space sets and a plurality of payloads of DCI.

In some possible designs, at least two search space sets in the plurality of search space sets are corresponding to different payloads of DCI, or at least two monitoring occasions in the one or more search space sets are corresponding to different payloads of DCI.

In some possible designs, in the plurality of search space sets, the at least two search space sets include a first search space set and a second search space set. That the processor is configured to enable, based on a search space set, the transceiver to send the DCI carrying the power saving signaling to the terminal device through the PDCCH includes: The processor is configured to determine the first search space set and the second search space set. The transceiver is configured to send, in the first search space set, the DCI carrying the power saving signaling to the terminal device through the PDCCH, where a payload of the DCI is a first DCI payload. The transceiver is further configured to send, in the second search space set, the DCI carrying the power saving signaling to the terminal device through the PDCCH, where a payload of the DCI is a second DCI payload. The first DCI payload and the second DCI payload are different.

In some possible designs, the terminal devices each are configured with a DRX cycle of a first cycle type, and a part of the terminal devices each are further configured with a DRX cycle of a second cycle type. That the transceiver is configured to send, in the first search space set, the DCI carrying the power saving signaling to the terminal device through the PDCCH includes: The transceiver is configured to: before a time period of on duration corresponding to the DRX cycle of the first cycle type, send the DCI carrying the power saving signaling to the terminal device by using the first search space set through the PDCCH.

That the transceiver is further configured to send, in the second search space set, the DCI carrying the power saving signaling to the terminal device through the PDCCH includes: The transceiver is further configured to: before a time period of on duration corresponding to a DRX cycle of a non-first cycle type, send the DCI carrying the power saving signaling to the terminal device by using the second search space set through the PDCCH.

In some possible designs, the search space set is related to a cycle type of a DRX cycle, or the search space set is related to a cycle type and a cycle length of a DRX cycle.

In some possible designs, the terminal devices include a first terminal device and a second terminal device. The configuration parameters include a first configuration parameter and a second configuration parameter. A first configuration parameter is used to configure a configuration parameter required by the first terminal device to monitor the power saving signaling, and a second configuration parameter is used to configure a configuration parameter required by the second terminal device to monitor the power saving signaling. The first terminal device is configured with a DRX cycle of the first cycle type, the second terminal device is configured with a DRX cycle of the first cycle type and a DRX cycle of the second cycle type, and a quantity of search space sets in the first configuration parameter is less than a quantity of search space sets in the second configuration parameter.

In some possible designs, the terminal devices include a first terminal device and a second terminal device. The configuration parameters include a first configuration parameter and a second configuration parameter. A first configuration parameter is used to configure a configuration parameter required by the first terminal device to monitor the power saving signaling, and a second configuration parameter is used to configure a configuration parameter required by the second terminal device to monitor the power saving signaling. Cycle types of DRX cycles of the first terminal device and the second terminal device are the same. A cycle length of the DRX cycle of the first terminal device is greater than a cycle length of the DRX cycle of the second terminal device. A quantity of search space sets in the first configuration parameter is less than a quantity of search space sets in the second configuration parameter.

In some possible designs, in the plurality of search space sets, the at least two search space sets include a first search space set and a second search space set. That the processor is configured to enable, based on a payload of the DCI and a search space set, the transceiver to send the DCI carrying the power saving signaling to the terminal device through the PDCCH includes: The processor is configured to determine the first search space set, and determine a payload of DCI carrying first power saving signaling as the first DCI payload. The transceiver is configured to send, in the first search space set, the DCI carrying the first power saving signaling to the terminal device through the PDCCH. The processor is configured to determine the second search space set, and determine a payload of DCI carrying second power saving signaling as the second DCI payload. The transceiver is configured to send, in the second search space set, the DCI carrying the second power saving signaling to the terminal device through the PDCCH. Content of the first power saving signaling and content of the second power saving signaling are different.

In some possible designs, in the one or more search space sets, the at least two monitoring occasions include a first monitoring occasion and a second monitoring occasion. The terminal devices each are configured with a DRX cycle of a first cycle type, and a part of the terminal devices each are further configured with a DRX cycle of a second cycle type. The first monitoring occasion is a monitoring occasion before a time period of on duration of the DRX cycle of the first cycle type, and is corresponding to a first DCI payload. The second monitoring occasion is a monitoring occasion before a time period of on duration of a DRX cycle of a non-first cycle type, and is corresponding to a second DCI payload. The first DCI payload and the second DCI payload are different.

In some possible designs, in the one or more search space sets, the at least two monitoring occasions include a first monitoring occasion and a second monitoring occasion. That the processor is configured to enable, based on a payload of the DCI and a search space set, the transceiver to send the DCI carrying the power saving signaling to the terminal device through the PDCCH includes: The processor is configured to determine the first monitoring occasion, and determine a payload of DCI carrying first power saving signaling as the first DCI payload. The transceiver is configured to send, on the first monitoring occasion, the DCI carrying the first power saving signaling to the terminal device through the PDCCH. The processor is configured to determine the second monitoring occasion, and determine a payload of DCI carrying second power saving signaling as the second DCI payload. The transceiver is configured to send, on the second monitoring occasion, the DCI carrying the second power saving signaling to the terminal device through the PDCCH. Content of the first power saving signaling and content of the second power saving signaling are different.

In some possible designs, the DCI carrying the power saving signaling is group common DCI. The configuration parameter of the power saving signaling further includes position indication information. Position indication information indicates a bit position of the power saving signaling of the terminal device in the group common DCI. The configuration parameter of the at least one terminal device includes a plurality of pieces of position indication information.

When the communication apparatus 1400 is used as a terminal device, the transceiver is configured to receive a configuration parameter of power saving signaling from a network device. The transceiver is further configured to receive DCI carrying the power saving signaling from the network device through a PDCCH. The controller is configured to enable, based on a payload of the DCI and/or a search space set, the transceiver to receive the DCI carrying the power saving signaling from the network device through the PDCCH. The configuration parameter of the power saving signaling includes a plurality of payloads of the downlink control information DCI and one or more search space sets. The payload of the DCI indicates a quantity of bits of the DCI. The DCI is used to carry the power saving signaling and is transmitted through the physical downlink control channel PDCCH. The search space set is used to determine a monitoring occasion of the PDCCH.

In some possible designs, at least two search space sets in the plurality of search space sets are corresponding to different payloads of DCI, or at least two monitoring occasions in the one or more search space sets are corresponding to different payloads of DCI.

In some possible designs, in the plurality of search space sets, the at least two search space sets include a first search space set and a second search space set. That the processor is configured to enable, based on a search space set, the transceiver to receive the DCI carrying the power saving signaling from the network device through the PDCCH includes: The processor is configured to determine the first search space set and the second search space set. The transceiver is configured to receive, in the first search space set, the DCI carrying the power saving signaling from the network device through the PDCCH, where a payload of the DCI is a first DCI payload. The transceiver is further configured to receive, in the second search space set, the DCI carrying the power saving signaling from the network device through the PDCCH, where a payload of the DCI is a second DCI payload. The first DCI payload and the second DCI payload are different.

In some possible designs, the communication apparatus is configured with a discontinuous reception DRX cycle of a first cycle type and a DRX cycle of a second cycle type.

That the transceiver is configured to receive, in the first search space set, the DCI carrying the power saving signaling from the network device through the PDCCH includes: The transceiver is configured to: before a time period of on duration corresponding to the DRX cycle of the first cycle type, receive the DCI carrying the power saving signaling from the network device by using the first search space set through the PDCCH.

That the transceiver is further configured to receive, in the second search space set, the DCI carrying the power saving signaling from the network device through the PDCCH includes: The transceiver is further configured to: before a time period of on duration corresponding to a DRX cycle of a non-first cycle type, receive the DCI carrying the power saving signaling from the network device by using the second search space set through the PDCCH.

In some possible designs, in the plurality of search space sets, the at least two search space sets include a first search space set and a second search space set. That the processor is configured to enable, based on a payload of the DCI and a search space set, the transceiver to receive the DCI carrying the power saving signaling from the network device through the PDCCH includes: The processor is configured to determine the first search space set, and determine a payload of DCI carrying first power saving signaling as the first DCI payload. The transceiver is configured to receive, in the first search space set, the DCI carrying the first power saving signaling from the network device through the PDCCH. The processor is configured to determine the second search space set, and determine a payload of DCI carrying second power saving signaling as the second DCI payload. The transceiver is configured to receive, in the second search space set, the DCI carrying the second power saving signaling from the network device through the PDCCH. Content of the first power saving signaling and content of the second power saving signaling are different.

In some possible designs, in the one or more search space sets, the at least two monitoring occasions include a first monitoring occasion and a second monitoring occasion. The communication apparatus is configured with a DRX cycle of a first cycle type and a DRX cycle of a second cycle type. The first monitoring occasion is a monitoring occasion before a time period of on duration of the DRX cycle of the first cycle type, and is corresponding to a first DCI payload. The second monitoring occasion is a monitoring occasion before a time period of on duration of a DRX cycle of a non-first cycle type, and is corresponding to a second DCI payload. The first DCI payload and the second DCI payload are different.

In some possible designs, in the one or more search space sets, the at least two monitoring occasions include a first monitoring occasion and a second monitoring occasion. That the processor is configured to enable, based on a payload of the DCI and a search space set, the transceiver to receive the DCI carrying the power saving signaling from the network device through the PDCCH includes: The processor is configured to determine the first monitoring occasion, and determine a payload of DCI carrying first power saving signaling as the first DCI payload. The transceiver is configured to receive, on the first monitoring occasion, the DCI carrying the first power saving signaling from the network device through the PDCCH. The processor is configured to determine the second monitoring occasion, and determine a payload of DCI carrying second power saving signaling as the second DCI payload. The transceiver is configured to receive, on the second monitoring occasion, the DCI carrying the second power saving signaling from the network device through the PDCCH. Content of the first power saving signaling and content of the second power saving signaling are different.

In some possible designs, the DCI carrying the power saving signaling is group common DCI. The configuration parameter further includes position indication information, the position indication information indicates a bit position of the power saving signaling of the communication apparatus in the group common DCI, and the configuration parameter includes a plurality of pieces of position indication information.

The transceiver 1403 may be an independently disposed transmitter, and the transmitter may be configured to send information to another device. Alternatively, the transceiver may be an independently disposed receiver, and is configured to receive information from another device. Alternatively, the transceiver may be a component integrating functions of sending and receiving information. A specific implementation of the transceiver is not limited in this embodiment of this application.

Optionally, the apparatus 1400 may further include a bus 1404. The transceiver 1403, the processor 1402, and the memory 1401 may be connected to each other through the bus 1404. The bus 1404 may be a peripheral component interconnect (peripheral component interconnect, PCI) bus, an extended industry standard architecture (extended industry standard architecture, EISA) bus, or the like. The bus 1404 may be classified into an address bus, a data bus, a control bus, and the like. For ease of representation, only one thick line is used to represent the bus in FIG. 14, but this does not mean that there is only one bus or only one type of bus.

A person of ordinary skill in the art may understand that all or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate parts may or may not be physically separate, and parts displayed as units may or may not be physical units, may be located at one position, or may be distributed on a plurality of network devices (for example, terminals). Some or all of the units may be selected based on actual requirements to achieve the objectives of the solutions of the embodiments.

In addition, functional units in embodiments of this application may be integrated into one processing unit, or each of the functional units may exist independently, or two or more units are integrated into one unit. The integrated unit may be implemented in a form of hardware, or may be implemented in a form of hardware combined with a software functional unit.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially or the part contributing to the current technology may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
separately sending, by a network device, configuration parameters of power saving signaling to terminal devices, wherein the configuration parameter of the power saving signaling comprises a payload of downlink control information DCI and a search space set; the payload of the DCI indicates a quantity of bits of the DCI; the DCI is used to carry the power saving signaling and is transmitted through a physical downlink control channel PDCCH; the search space set is used to determine a monitoring occasion of the PDCCH; and in the configuration parameters separately sent to the terminal devices, a configuration parameter of at least one terminal device comprises one or more search space sets and a plurality of payloads of DCI; and
sending, by the network device, the DCI carrying the power saving signaling to the terminal device through the PDCCH based on the payload of the DCI and/or the search space set.

2. The communication method according to claim 1, wherein at least two search space sets in the plurality of search space sets are corresponding to different payloads of DCI, or at least two monitoring occasions in the one or more search space sets are corresponding to different payloads of DCI.

3. The communication method according to claim 2, wherein in the plurality of search space sets, the at least two search space sets comprise a first search space set and a second search space set; and
the sending, by the network device, the DCI carrying the power saving signaling to the terminal device through the PDCCH based on the search space set comprises:
sending, by the network device in the first search space set, the DCI carrying the power saving signaling to the terminal device through the PDCCH, wherein a payload of the DCI is a first DCI payload; and
sending, by the network device in the second search space set, the DCI carrying the power saving signaling to the terminal device through the PDCCH, wherein a payload of the DCI is a second DCI payload, and the first DCI payload and the second DCI payload are different.

4. The communication method according to claim 3, wherein the terminal devices each are configured with a DRX cycle of a first cycle type, and a part of the terminal devices each are further configured with a DRX cycle of a second cycle type;
the sending, by the network device in the first search space set, the DCI carrying the power saving signaling to the terminal device through the PDCCH comprises:
before a time period of on duration corresponding to the DRX cycle of the first cycle type, sending, by the network device, the DCI carrying the power saving signaling to the terminal device by using the first search space set through the PDCCH; and
the sending, by the network device in the second search space set, the DCI carrying the power saving signaling to the terminal device through the PDCCH comprises:
before a time period of on duration corresponding to a DRX cycle of a non-first cycle type, sending, by the network device, the DCI carrying the power saving signaling to the terminal device by using the second search space set through the PDCCH.

5. The communication method according to any one of claims 1 to 4, wherein the search space set is related to a cycle type of a DRX cycle, or the search space set is related to a cycle type and a cycle length of a DRX cycle.

6. The communication method according to claim 5, wherein the terminal devices comprise a first terminal device and a second terminal device, the configuration parameters comprise a first configuration parameter and a second configuration parameter, the first configuration parameter is used to configure a configuration parameter required by the first terminal device to monitor the power saving signaling, and the second configuration parameter is used to configure a configuration parameter required by the second terminal device to monitor the power saving signaling; and
the first terminal device is configured with a DRX cycle of the first cycle type, the second terminal device is configured with a DRX cycle of the first cycle type and a DRX cycle of the second cycle type, and a quantity of search space sets in the first configuration parameter is less than a quantity of search space sets in the second configuration parameter.

7. The communication method according to claim 5, wherein the terminal devices comprise a first terminal device and a second terminal device, the configuration parameters comprise a first configuration parameter and a second configuration parameter, the first configuration parameter is used to configure a configuration parameter required by the first terminal device to monitor the power saving signaling, and the second configuration parameter is used to configure a configuration parameter required by the second terminal device to monitor the power saving signaling; and
cycle types of DRX cycles of the first terminal device and the second terminal device are the same, a cycle length of the DRX cycle of the first terminal device is greater than a cycle length of the DRX cycle of the second terminal device, and a quantity of search space sets in the first configuration parameter is less than a quantity of search space sets in the second configuration parameter.

8. The communication method according to any one of claims 2 to 7, wherein in the plurality of search space sets, the at least two search space sets comprise the first search space set and the second search space set; and
the sending, by the network device, the DCI carrying the power saving signaling to the terminal device through the PDCCH based on the payload of the DCI and the search space set comprises:
sending, by the network device in the first search space set, DCI carrying first power saving signaling to the terminal device through the PDCCH, wherein a payload of the DCI is the first DCI payload; and
sending, by the network device in the second search space set, DCI carrying second power saving signaling to the terminal device through the PDCCH, wherein a payload of the DCI is the second DCI payload, and content of the first power saving signaling and content of the second power saving signaling are different.

9. The communication method according to claim 2, wherein in the one or more search space sets, the at least two monitoring occasions comprise a first monitoring occasion and a second monitoring occasion; and the terminal devices each are configured with a DRX cycle of a first cycle type, and a part of the terminal devices each are further configured with a DRX cycle of a second cycle type;
the first monitoring occasion is a monitoring occasion before a time period of on duration of the DRX cycle of the first cycle type, and is corresponding to a first DCI payload; and
the second monitoring occasion is a monitoring occasion before a time period of on duration of a DRX cycle of a non-first cycle type, and is corresponding to a second DCI payload; and the first DCI payload and the second DCI payload are different.

10. The communication method according to claim 2 or 9, wherein in the one or more search space sets, the at least two monitoring occasions comprise the first monitoring occasion and the second monitoring occasion; and
the sending, by the network device, the DCI carrying the power saving signaling to the terminal device through the PDCCH based on the payload of the DCI and the search space set comprises:
sending, by the network device on the first monitoring occasion, DCI carrying first power saving signaling to the terminal device through the PDCCH, wherein a payload of the DCI is the first DCI payload; and
sending, by the network device on the second monitoring occasion, DCI carrying second power saving signaling to the terminal device through the PDCCH, wherein a payload of the DCI is the second DCI payload, and content of the first power saving signaling and content of the second power saving signaling are different.

11. The communication method according to any one of claims 1 to 10, wherein the DCI carrying the power saving signaling is group common DCI; and
the configuration parameter of the power saving signaling further comprises position indication information, the position indication information indicates a bit position of the power saving signaling of the terminal device in the group common DCI, and the configuration parameter of the at least one terminal device comprises a plurality of pieces of position indication information.

12. A communication method, comprising:
receiving, by a terminal device, a configuration parameter of power saving signaling from a network device, wherein the configuration parameter of the power saving signaling comprises a plurality of payloads of downlink control information DCI and one or more search space sets; the payload of the DCI indicates a quantity of bits of the DCI; the DCI is used to carry the power saving signaling and is transmitted through a physical downlink control channel PDCCH; and the search space set is used to determine a monitoring occasion of the PDCCH; and
receiving, by the terminal device, the DCI carrying the power saving signaling from the network device through the PDCCH based on the payload of the DCI and/or the search space set.

13. The communication method according to claim 12, wherein at least two search space sets in the plurality of search space sets are corresponding to different payloads of DCI, or at least two monitoring occasions in the one or more search space sets are corresponding to different payloads of DCI.

14. The communication method according to claim 13, wherein in the plurality of search space sets, the at least two search space sets comprise a first search space set and a second search space set; and
the receiving, by the terminal device, the DCI carrying the power saving signaling from the network device through the PDCCH based on the search space set comprises:
receiving, by the terminal device in the first search space set, the DCI carrying the power saving signaling from the network device through the PDCCH, wherein a payload of the DCI is a first DCI payload; and
receiving, by the terminal device in the second search space set, the DCI carrying the power saving signaling from the network device through the PDCCH, wherein a payload of the DCI is a second DCI payload, and the first DCI payload and the second DCI payload are different.

15. The communication method according to claim 14, wherein the terminal device is configured with a discontinuous reception DRX cycle of a first cycle type and a DRX cycle of a second cycle type;
the receiving, by the terminal device in the first search space set, the DCI carrying the power saving signaling from the network device through the PDCCH comprises:
before a time period of on duration corresponding to the DRX cycle of the first cycle type, receiving, by the terminal device, the DCI carrying the power saving signaling from the network device by using the first search space set through the PDCCH; and
the receiving, by the terminal device in the second search space set, the DCI carrying the power saving signaling from the network device through the PDCCH comprises:
before a time period of on duration corresponding to a DRX cycle of a non-first cycle type, receiving, by the terminal device, the DCI carrying the power saving signaling from the network device by using the second search space set through the PDCCH.

16. The communication method according to any one of claims 13 to 15, wherein in the plurality of search space sets, the at least two search space sets comprise the first search space set and the second search space set; and
the receiving, by the terminal device, the DCI carrying the power saving signaling from the network device through the PDCCH based on the payload of the DCI and the search space set comprises:
receiving, by the terminal device in the first search space set, DCI carrying first power saving signaling from the network device through the PDCCH, wherein a payload of the DCI is the first DCI payload; and
receiving, by the terminal device in the second search space set, DCI carrying second power saving signaling from the network device through the PDCCH, wherein a payload of the DCI is the second DCI payload, and content of the first power saving signaling and content of the second power saving signaling are different.

17. The communication method according to claim 13, wherein in the one or more search space sets, the at least two monitoring occasions comprise a first monitoring occasion and a second monitoring occasion; and the terminal device is configured with a DRX cycle of a first cycle type and a DRX cycle of a second cycle type;
the first monitoring occasion is a monitoring occasion before a time period of on duration of the DRX cycle of the first cycle type, and is corresponding to a first DCI payload; and
the second monitoring occasion is a monitoring occasion before a time period of on duration of a DRX cycle of a non-first cycle type, and is corresponding to a second DCI payload; and the first DCI payload and the second DCI payload are different.

18. The communication method according to claim 13 or 17, wherein in the one or more search space sets, the at least two monitoring occasions comprise the first monitoring occasion and the second monitoring occasion; and
the receiving, by the terminal device, the DCI carrying the power saving signaling from the network device through the PDCCH based on the payload of the DCI and the search space set comprises:
receiving, by the terminal device on the first monitoring occasion, DCI carrying first power saving signaling from the network device through the PDCCH, wherein a payload of the DCI is the first DCI payload; and
receiving, by the terminal device on the second monitoring occasion, DCI carrying second power saving signaling from the network device through the PDCCH, wherein a payload of the DCI is the second DCI payload, and content of the first power saving signaling and content of the second power saving signaling are different.

19. The communication method according to any one of claims 12 to 18, wherein the DCI carrying the power saving signaling is group common DCI; and
the configuration parameter further comprises position indication information, the position indication information indicates a bit position of the power saving signaling of the terminal device in the group common DCI, and the configuration parameter comprises a plurality of pieces of position indication information.

20. A communication apparatus, comprising a transceiver and a processor, wherein
the transceiver is configured to separately send configuration parameters of power saving signaling to terminal devices, wherein the configuration parameter of the power saving signaling comprises a payload of downlink control information DCI and a search space set; the payload of the DCI indicates a quantity of bits of the DCI; the DCI is used to carry the power saving signaling and is transmitted through a physical downlink control channel PDCCH; the search space set is used to determine a monitoring occasion of the PDCCH; and in the configuration parameters separately sent to the terminal devices, a configuration parameter of at least one terminal device comprises one or more search space sets and a plurality of payloads of DCI;
the transceiver is further configured to send the DCI carrying the power saving signaling to the terminal device through the PDCCH; and
the processor is configured to enable, based on the payload of the DCI and/or the search space set, the transceiver to send the DCI carrying the power saving signaling to the terminal device through the PDCCH.

21. The communication apparatus according to claim 20, wherein at least two search space sets in the plurality of search space sets are corresponding to different payloads of DCI, or at least two monitoring occasions in the one or more search space sets are corresponding to different payloads of DCI.

22. The communication apparatus according to claim 21, wherein in the plurality of search space sets, the at least two search space sets comprise a first search space set and a second search space set; and
that the processor is configured to enable, based on the search space set, the transceiver to send the DCI carrying the power saving signaling to the terminal device through the PDCCH comprises:
the processor is configured to determine the first search space set and the second search space set;
the transceiver is configured to send, in the first search space set, the DCI carrying the power saving signaling to the terminal device through the PDCCH, wherein a payload of the DCI is a first DCI payload; and
the transceiver is further configured to send, in the second search space set, the DCI carrying the power saving signaling to the terminal device through the PDCCH, wherein a payload of the DCI is a second DCI payload, and the first DCI payload and the second DCI payload are different.

23. The communication apparatus according to claim 22, wherein the terminal devices each are configured with a DRX cycle of a first cycle type, and a part of the terminal devices each are further configured with a DRX cycle of a second cycle type;
that the transceiver is configured to send, in the first search space set, the DCI carrying the power saving signaling to the terminal device through the PDCCH comprises:
the transceiver is configured to: before a time period of on duration corresponding to the DRX cycle of the first cycle type, send the DCI carrying the power saving signaling to the terminal device by using the first search space set through the PDCCH; and
that the transceiver is further configured to send, in the second search space set, the DCI carrying the power saving signaling to the terminal device through the PDCCH comprises:
the transceiver is further configured to: before a time period of on duration corresponding to a DRX cycle of a non-first cycle type, send the DCI carrying the power saving signaling to the terminal device by using the second search space set through the PDCCH.

24. The communication apparatus according to any one of claims 20 to 23, wherein the search space set is related to a cycle type of a DRX cycle, or the search space set is related to a cycle type and a cycle length of a DRX cycle.

25. The communication apparatus according to claim 24, wherein the terminal devices comprise a first terminal device and a second terminal device, the configuration parameters comprise a first configuration parameter and a second configuration parameter, the first configuration parameter is used to configure a configuration parameter required by the first terminal device to monitor the power saving signaling, and the second configuration parameter is used to configure a configuration parameter required by the second terminal device to monitor the power saving signaling; and
the first terminal device is configured with a DRX cycle of the first cycle type, the second terminal device is configured with a DRX cycle of the first cycle type and a DRX cycle of the second cycle type, and a quantity of search space sets in the first configuration parameter is less than a quantity of search space sets in the second configuration parameter.

26. The communication apparatus according to claim 24, wherein the terminal devices comprise a first terminal device and a second terminal device, the configuration parameters comprise a first configuration parameter and a second configuration parameter, the first configuration parameter is used to configure a configuration parameter required by the first terminal device to monitor the power saving signaling, and the second configuration parameter is used to configure a configuration parameter required by the second terminal device to monitor the power saving signaling; and
cycle types of DRX cycles of the first terminal device and the second terminal device are the same, a cycle length of the DRX cycle of the first terminal device is greater than a cycle length of the DRX cycle of the second terminal device, and a quantity of search space sets in the first configuration parameter is less than a quantity of search space sets in the second configuration parameter.

27. The communication apparatus according to any one of claims 21 to 26, wherein in the plurality of search space sets, the at least two search space sets comprise the first search space set and the second search space set; and
that the processor is configured to enable, based on the payload of the DCI and the search space set, the transceiver to send the DCI carrying the power saving signaling to the terminal device through the PDCCH comprises:
the processor is configured to determine the first search space set, and determine a payload of DCI carrying first power saving signaling as the first DCI payload;
the transceiver is configured to send, in the first search space set, the DCI carrying the first power saving signaling to the terminal device through the PDCCH;
the processor is configured to determine the second search space set, and determine a payload of DCI carrying second power saving signaling as the second DCI payload; and
the transceiver is configured to send, in the second search space set, the DCI carrying the second power saving signaling to the terminal device through the PDCCH, wherein content of the first power saving signaling and content of the second power saving signaling are different.

28. The communication apparatus according to claim 21, wherein in the one or more search space sets, the at least two monitoring occasions comprise a first monitoring occasion and a second monitoring occasion; and the terminal devices each are configured with a DRX cycle of a first cycle type, and a part of the terminal devices each are further configured with a DRX cycle of a second cycle type;
the first monitoring occasion is a monitoring occasion before a time period of on duration of the DRX cycle of the first cycle type, and is corresponding to a first DCI payload; and
the second monitoring occasion is a monitoring occasion before a time period of on duration of a DRX cycle of a non-first cycle type, and is corresponding to a second DCI payload; and the first DCI payload and the second DCI payload are different.

29. The communication apparatus according to claim 21 or 28, wherein in the one or more search space sets, the at least two monitoring occasions comprise the first monitoring occasion and the second monitoring occasion;
that the processor is configured to enable, based on the payload of the DCI and the search space set, the transceiver to send the DCI carrying the power saving signaling to the terminal device through the PDCCH comprises:
the processor is configured to determine the first monitoring occasion, and determine a payload of DCI carrying first power saving signaling as the first DCI payload;
the transceiver is configured to send, on the first monitoring occasion, the DCI carrying the first power saving signaling to the terminal device through the PDCCH;
the processor is configured to determine the second monitoring occasion, and determine a payload of DCI carrying second power saving signaling as the second DCI payload; and
the transceiver is configured to send, on the second monitoring occasion, the DCI carrying the second power saving signaling to the terminal device through the PDCCH, wherein content of the first power saving signaling and content of the second power saving signaling are different.

30. The communication apparatus according to any one of claims 20 to 29, wherein the DCI carrying the power saving signaling is group common DCI; and
the configuration parameter of the power saving signaling further comprises position indication information, the position indication information indicates a bit position of the power saving signaling of the terminal device in the group common DCI, and the configuration parameter of the at least one terminal device comprises a plurality of pieces of position indication information.

31. A communication apparatus, comprising a transceiver and a processor, wherein
the transceiver is configured to receive a configuration parameter of power saving signaling from a network device, wherein the configuration parameter of the power saving signaling comprises a plurality of payloads of downlink control information DCI and one or more search space sets; the payload of the DCI indicates a quantity of bits of the DCI; the DCI is used to carry the power saving signaling and is transmitted through a physical downlink control channel PDCCH; and the search space set is used to determine a monitoring occasion of the PDCCH;
the transceiver is further configured to receive the DCI carrying the power saving signaling from the network device through the PDCCH; and
the controller is configured to enable, based on the payload of the DCI and/or the search space set, the transceiver to receive the DCI carrying the power saving signaling from the network device through the PDCCH.

32. The communication apparatus according to claim 31, wherein at least two search space sets in the plurality of search space sets are corresponding to different payloads of DCI, or at least two monitoring occasions in the one or more search space sets are corresponding to different payloads of DCI.

33. The communication apparatus according to claim 32, wherein in the plurality of search space sets, the at least two search space sets comprise a first search space set and a second search space set; and
that the processor is configured to enable, based on the search space set, the transceiver to receive the DCI carrying the power saving signaling from the network device through the PDCCH comprises:
the processor is configured to determine the first search space set and the second search space set;
the transceiver is configured to receive, in the first search space set, the DCI carrying the power saving signaling from the network device through the PDCCH, wherein a payload of the DCI is a first DCI payload; and
the transceiver is further configured to receive, in the second search space set, the DCI carrying the power saving signaling from the network device through the PDCCH, wherein a payload of the DCI is a second DCI payload, and the first DCI payload and the second DCI payload are different.

34. The communication apparatus according to claim 33, wherein the communication apparatus is configured with a discontinuous reception DRX cycle of a first cycle type and a DRX cycle of a second cycle type;
that the transceiver is configured to receive, in the first search space set, the DCI carrying the power saving signaling from the network device through the PDCCH comprises:
the transceiver is configured to: before a time period of on duration corresponding to the DRX cycle of the first cycle type, receive the DCI carrying the power saving signaling from the network device by using the first search space set through the PDCCH; and
that the transceiver is further configured to receive, in the second search space set, the DCI carrying the power saving signaling from the network device through the PDCCH comprises:
the transceiver is further configured to: before a time period of on duration corresponding to a DRX cycle of a non-first cycle type, receive the DCI carrying the power saving signaling from the network device by using the second search space set through the PDCCH.

35. The communication apparatus according to any one of claims 32 to 34, wherein in the plurality of search space sets, the at least two search space sets comprise the first search space set and the second search space set; and
that the processor is configured to enable, based on the payload of the DCI and the search space set, the transceiver to receive the DCI carrying the power saving signaling from the network device through the PDCCH comprises:
the processor is configured to determine the first search space set, and determine a payload of DCI carrying first power saving signaling as the first DCI payload;
the transceiver is configured to receive, in the first search space set, the DCI carrying the first power saving signaling from the network device through the PDCCH;
the processor is configured to determine the second search space set, and determine a payload of DCI carrying second power saving signaling as the second DCI payload; and
the transceiver is configured to receive, in the second search space set, the DCI carrying the second power saving signaling from the network device through the PDCCH, wherein content of the first power saving signaling and content of the second power saving signaling are different.

36. The communication apparatus according to claim 32, wherein in the one or more search space sets, the at least two monitoring occasions comprise a first monitoring occasion and a second monitoring occasion; and the communication apparatus is configured with a DRX cycle of a first cycle type and a DRX cycle of a second cycle type;
the first monitoring occasion is a monitoring occasion before a time period of on duration of the DRX cycle of the first cycle type, and is corresponding to a first DCI payload; and
the second monitoring occasion is a monitoring occasion before a time period of on duration of a DRX cycle of a non-first cycle type, and is corresponding to a second DCI payload; and the first DCI payload and the second DCI payload are different.

37. The communication apparatus according to claim 32 or 36, wherein in the one or more search space sets, the at least two monitoring occasions comprise the first monitoring occasion and the second monitoring occasion;
that the processor is configured to enable, based on the payload of the DCI and the search space set, the transceiver to receive the DCI carrying the power saving signaling from the network device through the PDCCH comprises:
the processor is configured to determine the first monitoring occasion, and determine a payload of DCI carrying first power saving signaling as the first DCI payload;
the transceiver is configured to receive, on the first monitoring occasion, the DCI carrying the first power saving signaling from the network device through the PDCCH;
the processor is configured to determine the second monitoring occasion, and determine a payload of DCI carrying second power saving signaling as the second DCI payload; and
the transceiver is configured to receive, on the second monitoring occasion, the DCI carrying the second power saving signaling from the network device through the PDCCH, wherein content of the first power saving signaling and content of the second power saving signaling are different.

38. The communication apparatus according to any one of claims 31 to 37, wherein the DCI carrying the power saving signaling is group common DCI; and
the configuration parameter further comprises position indication information, the position indication information indicates a bit position of the power saving signaling of the communication apparatus in the group common DCI, and the configuration parameter comprises a plurality of pieces of position indication information.

39. A communication apparatus, comprising a processor and a memory, wherein the processor is coupled to the memory, and the memory stores program instructions; and when the program instructions stored in the memory are executed by the processor, the communication method according to any one of claims 1 to 11 is implemented, or the communication method according to any one of claims 12 to 19 is implemented.

40. A readable storage medium, comprising a program or instructions, wherein when the program or the instructions is/are executed, the communication method according to any one of claims 1 to 11 is implemented, or the communication method according to any one of claims 12 to 19 is implemented.

41. A chip, comprising a processor, wherein the processor is coupled to a memory, and the memory stores program instructions; and when the program instructions stored in the memory are executed by the processor, the communication method according to any one of claims 1 to 11 is implemented, or the communication method according to any one of claims 12 to 19 is implemented.
